# EUROPEAN PATENT APPLICATION

(11) **EP 4 838 932 A1**
(43) Date of publication of application: **11.11.2026**
(21) Application number: 25741346.8
(22) Date of filing: 02.01.2025
(51) Int. Cl.: H04W 24/02

(54) **MACHINE MODEL REASONING CAPABILITY MANAGEMENT AND CONTROL METHOD AND DEVICE**

(30) Priority: 16.01.2024 CN 202410068001
(71) Applicant: Huawei Technologies Co., Ltd., Shenzhen, Guangdong 518129 (CN)
(72) Inventor: SHI, Xiaoli, Shenzhen, Guangdong 518129 (CN); XU, Ruiyue, Shenzhen, Guangdong 518129 (CN); ZOU, Lan, Shenzhen, Guangdong 518129 (CN)
(74) Representative: Thun, Clemens
(86) International application number: PCT/CN2025/070223
(87) International publication number: WO 2025/152783

(57) **Abstract**

This application provides a method for managing and controlling a machine model inference capability, and an apparatus. It is used to manage and control an inference capability of a machine model, relating to the field of wireless communication technologies. In the method, a second communication apparatus sends first information to a first communication apparatus, where the first information includes an AI/ML capability corresponding to AI/ML inference. The second communication apparatus receives, from the first communication apparatus, an inference result of the AI/ML inference. Based on this solution, the second communication apparatus may indicate, to the first communication apparatus by using the first information, the AI/ML capability corresponding to the AI/ML inference, thereby enabling management and control of the AI/ML capability. This allows the first communication apparatus to perform the AI/ML inference of the AI/ML capability based on the first information.

## Description

### CROSS-REFERENCE TO RELATED APPLICATIONS

This application claims priority to Chinese Patent Application No. 202410068001.3, filed with the China National Intellectual Property Administration on January 16, 2024 and entitled "METHOD FOR MANAGING AND CONTROLLING MACHINE MODEL INFERENCE CAPABILITY, AND APPARATUS", which is incorporated herein by reference in its entirety.

### TECHNICAL FIELD

This application relates to the field of wireless communication technologies, and in particular, to a method for managing and controlling a machine model inference capability, and an apparatus.

### BACKGROUND

Currently, the use of artificial intelligence/machine learning (artificial intelligence/machine learning, AI/ML) technologies to enable radio access network (radio access network, RAN) intelligence (intelligence) has been defined in the 3rd generation partnership project (3rd generation partnership project, 3GPP). Specifically, the AI/ML technologies are used to support energy saving (energy saving, ES), mobility load balancing (mobility load balancing, MLB), mobility robustness optimization (mobility robustness optimization, MRO), and similar functions. The standard discussions also define scenarios for supporting and managing RAN intelligence inference types on a network management system. Specific management information includes switch management and policy management for the RAN intelligence inference types. In particular, a cross-domain management node may configure switches and execution policies for specific use cases. The standard further discusses scenarios for supporting management data analytics (management data analytics, MDA) inference types of AI/ML.

However, the current standard only addresses switch management and execution policy management for the RAN intelligence inference types, without providing management of AI/ML capabilities of RAN intelligence.

### SUMMARY

This application provides a method for managing and controlling a machine model inference capability, and an apparatus, to manage and control an inference capability of a machine model.

According to a first aspect, a method for managing and controlling a machine model inference capability is provided. The method may be performed by a second communication apparatus. The second communication apparatus may be a second management device or a chip/chip system. In the method, the second communication apparatus sends first information to a first communication apparatus, where the first information includes an AI/ML capability corresponding to AI/ML inference. The second communication apparatus receives, from the first communication apparatus, an inference result of the AI/ML inference.

Based on the foregoing solution, the second communication apparatus may indicate, to the first communication apparatus by using the first information, the AI/ML capability corresponding to the AI/ML inference, thereby enabling management and control of the AI/ML capability. This allows the first communication apparatus to perform the AI/ML inference of the AI/ML capability based on the first information.

In a possible implementation, the first information is used to request the first communication apparatus to perform the AI/ML inference of the AI/ML capability. Based on this solution, the first information may be used to request to perform the AI/ML inference of the AI/ML capability. In other words, the second communication apparatus may manage and control the AI/ML capability based on the first information.

In a possible implementation, the second communication apparatus receives AI/ML capability information supported by the first communication apparatus. An AI/ML capability indicated by the AI/ML capability information includes the AI/ML capability corresponding to the AI/ML inference.

Based on the foregoing solution, the second communication apparatus may obtain the AI/ML capability information supported by the first communication apparatus, thereby enabling management and control of the AI/ML capability supported by the first communication apparatus.

In a possible implementation, the second communication apparatus sends second information to the first communication apparatus, where the second information is used to request the first communication apparatus to send the AI/ML capability information.

Based on the foregoing solution, the second communication apparatus may request the first communication apparatus to send the supported AI/ML capability information, to obtain the AI/ML capability supported by the first communication apparatus.

In a possible implementation, the second information indicates the first communication apparatus to send the AI/ML capability information supported by one or more of the following: a management data analytics function, a mobility optimization function, a network energy saving function, or a load balancing function.

Based on the foregoing solution, the second communication apparatus may indicate, by using the second information, the first communication apparatus to send the AI/ML capability information supported by inference types such as the management data analytics function, the mobility optimization function, the network energy saving function, or the load balancing function, thereby enabling management and control of the AI/ML capability information indicated by the inference types such as the management data analytics function, the mobility optimization function, the network energy saving function, or the load balancing function.

In a possible implementation, the second communication apparatus sends an inference type of the AI/ML capability, where the inference type includes one or more of the following: the management data analytics function, the mobility optimization function, the network energy saving function, or the load balancing function.

Based on the foregoing solution, the second communication apparatus may send, to the first communication apparatus, an AI/ML capability that is indicated by the first information and that corresponds to an inference type, to manage and control an AI/ML capability of a specific inference type.

In a possible implementation, the AI/ML capability includes one or more of the following: a traffic analysis capability, a traffic prediction capability, a mobility analysis capability, a mobility prediction capability, a load analysis capability, a load prediction capability, an energy consumption analysis capability, or an energy consumption prediction capability.

In a possible implementation, the second communication apparatus receives one or both of an inference status or inference time.

Based on the foregoing solution, the first communication apparatus may further send one or both of the inference status or the inference time to the second communication apparatus, so that the second communication apparatus learns of one or both of the inference status or the inference time, helping the second communication apparatus manage and control the AI/ML inference in a timely manner.

In a possible implementation, the inference result further includes an inference type of the inference result, and the inference type includes one or more of the following: the mobility optimization function, the network energy saving function, or the load balancing function.

Based on the foregoing solution, the first communication apparatus may send the inference type of the inference result to the second communication apparatus, that is, send an inference type that can use the inference result, so that the second communication apparatus performs a corresponding function based on the inference result.

In a possible implementation, the inference result includes one or more of the following: a cell individual offset, a cell identifier, a network device identifier, a time trigger, a handover trigger, cell deactivation information, carrier deactivation information, or slot deactivation information.

According to a second aspect, a method for managing and controlling a machine model inference capability is provided. The method may be performed by a first communication apparatus. The first communication apparatus may be a first management device or a chip/chip system. In the method, the first communication apparatus receives first information from a second communication apparatus, where the first information includes an AI/ML capability corresponding to AI/ML inference. The first communication apparatus performs the AI/ML inference of the AI/ML capability, to obtain an inference result. The first communication apparatus sends the inference result to the second communication apparatus.

In a possible implementation, the first information is used to request the first communication apparatus to perform the AI/ML inference of the AI/ML capability.

In a possible implementation, the first communication apparatus sends supported AI/ML capability information to the second communication apparatus. An AI/ML capability indicated by the AI/ML capability information includes the AI/ML capability corresponding to the AI/ML inference.

In a possible implementation, the first communication apparatus receives second information from the second communication apparatus, where the second information is used to request the first communication apparatus to send the AI/ML capability information.

In a possible implementation, the second information indicates the first communication apparatus to send the AI/ML capability information supported by one or more of the following: a management data analytics function, a mobility optimization function, a network energy saving function, or a load balancing function.

In a possible implementation, the first communication apparatus receives an inference type of the AI/ML capability, where the inference type includes one or more of the following: the management data analytics function, the mobility optimization function, the network energy saving function, or the load balancing function.

In a possible implementation, the AI/ML capability includes one or more of the following: a traffic analysis capability, a traffic prediction capability, a mobility analysis capability, a mobility prediction capability, a load analysis capability, a load prediction capability, an energy consumption analysis capability, or an energy consumption prediction capability.

In a possible implementation, the first communication apparatus sends one or both of an inference status or inference time.

In a possible implementation, the inference result further includes an inference type of the inference result, and the inference type includes one or more of the following: the mobility optimization function, the network energy saving function, or the load balancing function.

In a possible implementation, the inference result includes one or more of the following: a cell individual offset, a cell identifier, a network device identifier, a time trigger, a handover trigger, cell deactivation information, carrier deactivation information, or slot deactivation information.

According to a third aspect, a method for managing and controlling a machine model inference capability is provided. The method may be performed by a second communication apparatus. The second communication apparatus may be a second management device or a chip/chip system. In the method, the second communication apparatus receives AI/ML capability information supported by a first communication apparatus. The AI/ML capability information indicates one or more AI/ML capabilities. The AI/ML capability information is used to manage and control the one or more AI/ML capabilities.

Based on the foregoing solution, the second communication apparatus can obtain an AI/ML capability supported by the first communication apparatus, and therefore can manage and control the AI/ML capability supported by the first communication apparatus. In some embodiments, the AI/ML capability information is used to manage and control the one or more AI/ML capabilities. It may be understood that the management and control may be that a cross-domain management function unit triggers, based on the received AI/ML capability information, inference of an AI/ML capability of a domain management function unit, or triggers inference of an AI/ML inference type of a domain management function unit. It should be further noted that, the inference of the AI/ML capability herein may be understood as training an ML model based on the AI/ML capability, and then applying the ML model to an AI/ML inference type, to complete an AI/ML inference function corresponding to the AI/ML inference type.

In a possible implementation, the second communication apparatus receives, from the first communication apparatus, an AI/ML inference type to which the AI/ML capability information is applicable. Optionally, the AI/ML inference type includes one or more of the following: a management data analytics function, a mobility optimization function, a network energy saving function, or a load balancing function.

Based on the foregoing solution, the second communication apparatus may obtain the AI/ML inference type to which the AI/ML capability information is applicable, and therefore can manage and control AI/ML capabilities of one or more AI/ML inference types of the first communication apparatus.

In a possible implementation, the second communication apparatus sends second information to the first communication apparatus, where the second information is used to request the first communication apparatus to send the AI/ML capability information.

Based on the foregoing solution, the second communication apparatus may request the first communication apparatus to send the supported AI/ML capability information, to obtain the AI/ML capability supported by the first communication apparatus.

In a possible implementation, the second information indicates the first communication apparatus to send the AI/ML capability information supported by one or more of the following: the management data analytics function, the mobility optimization function, the network energy saving function, or the load balancing function.

Based on the foregoing solution, the second communication apparatus may indicate, by using the second information, the first communication apparatus to send the AI/ML capability information supported by inference types such as the management data analytics function, the mobility optimization function, the network energy saving function, or the load balancing function, thereby enabling management and control of the AI/ML capability information indicated by the inference types such as the management data analytics function, the mobility optimization function, the network energy saving function, or the load balancing function.

In a possible implementation, the second communication apparatus sends first information to the first communication apparatus, where the first information includes an AI/ML capability corresponding to AI/ML inference. The one or more AI/ML capabilities indicated by the AI/ML capability information include the AI/ML capability indicated by the first information. The second communication apparatus receives, from the first communication apparatus, an inference result of the AI/ML inference.

Based on the foregoing solution, the second communication apparatus may indicate, to the first communication apparatus by using the first information, the AI/ML capability corresponding to the AI/ML inference, thereby enabling management and control of the AI/ML capability. This allows the first communication apparatus to perform the AI/ML inference of the AI/ML capability based on the first information.

In a possible implementation, the first information is used to request the first communication apparatus to perform the AI/ML inference of the AI/ML capability indicated by the first information. Based on this solution, the first information may be used to request to perform the AI/ML inference of the AI/ML capability. In other words, the second communication apparatus may manage and control the AI/ML capability based on the first information.

In a possible implementation, the AI/ML capability includes one or more of the following: a traffic analysis capability, a traffic prediction capability, a mobility analysis capability, a mobility prediction capability, a load analysis capability, a load prediction capability, an energy consumption analysis capability, or an energy consumption prediction capability.

In a possible implementation, the second communication apparatus receives one or both of an inference status or inference time. Based on the foregoing solution, the first communication apparatus may further send one or both of the inference status or the inference time to the second communication apparatus, so that the second communication apparatus learns of one or both of the inference status or the inference time, helping the second communication apparatus manage and control the AI/ML inference in a timely manner.

In a possible implementation, the inference result further includes an inference type of the inference result, and the inference type includes one or more of the following: the mobility optimization function, the network energy saving function, or the load balancing function.

Based on the foregoing solution, the first communication apparatus may send the inference type of the inference result to the second communication apparatus, that is, send an inference type that can use the inference result, so that the second communication apparatus performs a corresponding function based on the inference result.

In a possible implementation, the inference result includes one or more of the following: a cell individual offset, a cell identifier, a network device identifier, a time trigger, a handover trigger, cell deactivation information, carrier deactivation information, or slot deactivation information.

According to a fourth aspect, a method for managing and controlling a machine model inference capability is provided. The method may be performed by a first communication apparatus. The first communication apparatus may be a first management device or a chip/chip system. In the method, the first communication apparatus sends supported AI/ML capability information to a second communication apparatus. The AI/ML capability information indicates one or more AI/ML capabilities. The AI/ML capability information is used to manage and control the one or more AI/ML capabilities.

In a possible implementation, the first communication apparatus sends, to the second communication apparatus, an AI/ML inference type to which the AI/ML capability information is applicable. Optionally, the AI/ML inference type includes one or more of the following: a management data analytics function, a mobility optimization function, a network energy saving function, or a load balancing function.

In a possible implementation, the first communication apparatus receives second information from the second communication apparatus, where the second information is used to request the first communication apparatus to send the AI/ML capability information.

In a possible implementation, the second information indicates the first communication apparatus to send the AI/ML capability information supported by one or more of the following: the management data analytics function, the mobility optimization function, the network energy saving function, or the load balancing function.

In a possible implementation, the first communication apparatus receives first information from the second communication apparatus, where the first information includes an AI/ML capability corresponding to AI/ML inference. The AI/ML capabilities indicated by the AI/ML capability information include the AI/ML capability indicated by the first information. The first communication apparatus sends an inference result of the AI/ML inference to the second communication apparatus.

In a possible implementation, the first information is used to request the first communication apparatus to perform the AI/ML inference of the AI/ML capability.

In a possible implementation, the AI/ML capability includes one or more of the following: a traffic analysis capability, a traffic prediction capability, a mobility analysis capability, a mobility prediction capability, a load analysis capability, a load prediction capability, an energy consumption analysis capability, or an energy consumption prediction capability.

In a possible implementation, the first communication apparatus sends one or both of an inference status or inference time to the second communication apparatus.

In a possible implementation, the inference result further includes an inference type of the inference result, and the inference type includes one or more of the following: the mobility optimization function, the network energy saving function, or the load balancing function.

In a possible implementation, the inference result includes one or more of the following: a cell individual offset, a cell identifier, a network device identifier, a time trigger, a handover trigger, cell deactivation information, carrier deactivation information, or slot deactivation information.

According to a fifth aspect, a communication apparatus is provided, including a processing unit and a transceiver unit.

The processing unit is configured to generate first information, where the first information includes an AI/ML capability corresponding to AI/ML inference. The transceiver unit is configured to send the first information to a first communication apparatus. The transceiver unit is further configured to receive, from the first communication apparatus, an inference result of the AI/ML inference.

In a possible implementation, the first information is used to request the first communication apparatus to perform the AI/ML inference of the AI/ML capability.

In a possible implementation, the transceiver unit is further configured to receive supported AI/ML capability information from the first communication apparatus. An AI/ML capability indicated by the AI/ML capability information includes the AI/ML capability corresponding to the AI/ML inference.

In a possible implementation, the transceiver unit is further configured to send second information to the first communication apparatus, where the second information is used to request the first communication apparatus to send the AI/ML capability information.

In a possible implementation, the second information indicates the first communication apparatus to send the AI/ML capability information supported by one or more of the following: a management data analytics function, a mobility optimization function, a network energy saving function, or a load balancing function.

In a possible implementation, the transceiver unit is further configured to send an inference type of the AI/ML capability, where the inference type includes one or more of the following: the management data analytics function, the mobility optimization function, the network energy saving function, or the load balancing function.

In a possible implementation, the AI/ML capability includes one or more of the following: a traffic analysis capability, a traffic prediction capability, a mobility analysis capability, a mobility prediction capability, a load analysis capability, a load prediction capability, an energy consumption analysis capability, or an energy consumption prediction capability.

In a possible implementation, one or both of an inference status or inference time is received.

In a possible implementation, the inference result further includes an inference type of the inference result, and the inference type includes one or more of the following: the mobility optimization function, the network energy saving function, or the load balancing function.

In a possible implementation, the inference result includes one or more of the following: a cell individual offset, a cell identifier, a network device identifier, a time trigger, a handover trigger, cell deactivation information, carrier deactivation information, or slot deactivation information.

According to a sixth aspect, a communication apparatus is provided, including a processing unit and a transceiver unit.

The transceiver unit is configured to receive first information from a second communication apparatus, where the first information includes an AI/ML capability corresponding to AI/ML inference. The processing unit is configured to perform the AI/ML inference of the AI/ML capability to obtain an inference result. The transceiver unit is further configured to send the inference result to the second communication apparatus.

In a possible implementation, the first information is used to request a first communication apparatus to perform the AI/ML inference of the AI/ML capability.

In a possible implementation, the transceiver unit is further configured to send supported AI/ML capability information to the second communication apparatus. An AI/ML capability indicated by the AI/ML capability information includes the AI/ML capability corresponding to the AI/ML inference.

In a possible implementation, the transceiver unit is further configured to receive second information from the second communication apparatus, where the second information is used to request the first communication apparatus to send the AI/ML capability information.

In a possible implementation, the second information indicates the first communication apparatus to send the AI/ML capability information supported by one or more of the following: a management data analytics function, a mobility optimization function, a network energy saving function, or a load balancing function.

In a possible implementation, an inference type of the AI/ML capability is received, where the inference type includes one or more of the following: the management data analytics function, the mobility optimization function, the network energy saving function, or the load balancing function.

In a possible implementation, the AI/ML capability includes one or more of the following: a traffic analysis capability, a traffic prediction capability, a mobility analysis capability, a mobility prediction capability, a load analysis capability, a load prediction capability, an energy consumption analysis capability, or an energy consumption prediction capability.

In a possible implementation, the transceiver unit is further configured to send one or both of an inference status or inference time.

In a possible implementation, the inference result further includes an inference type of the inference result, and the inference type includes one or more of the following: the mobility optimization function, the network energy saving function, or the load balancing function.

In a possible implementation, the inference result includes one or more of the following: a cell individual offset, a cell identifier, a network device identifier, a time trigger, a handover trigger, cell deactivation information, carrier deactivation information, or slot deactivation information.

According to a seventh aspect, a communication apparatus is provided, including a processing unit and a transceiver unit.

The transceiver unit is configured to receive supported AI/ML capability information from a first communication apparatus. The AI/ML capability information indicates one or more AI/ML capabilities. The AI/ML capability information is used to manage and control the one or more AI/ML capabilities. The processing unit is configured to manage and control the one or more AI/ML capabilities.

In a possible implementation, the transceiver unit is further configured to receive, from the first communication apparatus, an AI/ML inference type to which the AI/ML capability information is applicable. Optionally, the AI/ML inference type includes one or more of the following: a management data analytics function, a mobility optimization function, a network energy saving function, or a load balancing function.

In a possible implementation, the transceiver unit is further configured to send second information to the first communication apparatus, where the second information is used to request the first communication apparatus to send the AI/ML capability information.

In a possible implementation, the second information indicates the first communication apparatus to send the AI/ML capability information supported by one or more of the following: the management data analytics function, the mobility optimization function, the network energy saving function, or the load balancing function.

In a possible implementation, the transceiver unit is further configured to send first information to the first communication apparatus, where the first information includes an AI/ML capability corresponding to AI/ML inference. The one or more AI/ML capabilities indicated by the AI/ML capability information include the AI/ML capability indicated by the first information. The transceiver unit is further configured to receive, from the first communication apparatus, an inference result of the AI/ML inference.

In a possible implementation, the first information is used to request the first communication apparatus to perform the AI/ML inference of the AI/ML capability indicated by the first information.

In a possible implementation, the AI/ML capability includes one or more of the following: a traffic analysis capability, a traffic prediction capability, a mobility analysis capability, a mobility prediction capability, a load analysis capability, a load prediction capability, an energy consumption analysis capability, or an energy consumption prediction capability.

In a possible implementation, the second communication apparatus receives one or both of an inference status or inference time.

In a possible implementation, the inference result further includes an inference type of the inference result, and the inference type includes one or more of the following: the mobility optimization function, the network energy saving function, or the load balancing function.

In a possible implementation, the inference result includes one or more of the following: a cell individual offset, a cell identifier, a network device identifier, a time trigger, a handover trigger, cell deactivation information, carrier deactivation information, or slot deactivation information.

According to an eighth aspect, a communication apparatus is provided, including a processing unit and a transceiver unit.

The processing unit is configured to determine supported AI/ML capability information. The transceiver unit is configured to send the supported AI/ML capability information to a second communication apparatus. The AI/ML capability information indicates one or more AI/ML capabilities. The AI/ML capability information is used to manage and control the one or more AI/ML capabilities.

In a possible implementation, the transceiver unit is further configured to send, to the second communication apparatus, an AI/ML inference type to which the AI/ML capability information is applicable. Optionally, the AI/ML inference type includes one or more of the following: a management data analytics function, a mobility optimization function, a network energy saving function, or a load balancing function.

In a possible implementation, the transceiver unit is further configured to receive second information from the second communication apparatus, where the second information is used to request the first communication apparatus to send the AI/ML capability information.

In a possible implementation, the second information indicates the first communication apparatus to send the AI/ML capability information supported by one or more of the following: the mobility optimization function, the network energy saving function, or the load balancing function.

In a possible implementation, the transceiver unit is further configured to receive first information from the second communication apparatus, where the first information includes an AI/ML capability corresponding to AI/ML inference. The one or more AI/ML capabilities indicated by the AI/ML capability information include the AI/ML capability indicated by the first information. The transceiver unit is further configured to send the inference result of the AI/ML inference to the second communication apparatus.

In a possible implementation, the first information is used to request the first communication apparatus to perform the AI/ML inference of the AI/ML capability indicated by the first information.

In a possible implementation, the AI/ML capability includes one or more of the following: a traffic analysis capability, a traffic prediction capability, a mobility analysis capability, a mobility prediction capability, a load analysis capability, a load prediction capability, an energy consumption analysis capability, or an energy consumption prediction capability.

In a possible implementation, the transceiver unit is further configured to send one or both of an inference status or inference time to the second communication apparatus.

In a possible implementation, the inference result further includes an inference type of the inference result, and the inference type includes one or more of the following: the mobility optimization function, the network energy saving function, or the load balancing function.

In a possible implementation, the inference result includes one or more of the following: a cell individual offset, a cell identifier, a network device identifier, a time trigger, a handover trigger, cell deactivation information, carrier deactivation information, or slot deactivation information.

According to a ninth aspect, this application provides a communication system. The communication system may include a second communication apparatus that performs the method according to the first aspect and a first communication apparatus that performs the method according to the second aspect.

According to a tenth aspect, this application provides a communication system. The communication system may include a second communication apparatus that performs the method according to the third aspect and a first communication apparatus that performs the method according to the fourth aspect.

According to an eleventh aspect, this application provides a computer-readable storage medium. The computer storage medium stores computer-readable instructions, and when a computer reads and executes the computer-readable instructions, the computer is caused to perform the method in any possible implementation of any one of the first aspect to the fourth aspect.

According to a twelfth aspect, this application provides a computer program product. When a computer reads and executes the computer program product, the computer is caused to perform the method in any possible implementation of any one of the first aspect to the fourth aspect.

According to a thirteenth aspect, this application provides a chip. The chip is configured to read a computer program stored in a memory, to perform the method in any possible implementation of any one of the first aspect to the fourth aspect.

For technical effects that can be achieved in any one of the second aspect to the thirteenth aspect, refer to the descriptions of the technical effects that can be achieved in any possible implementation of the first aspect. Repeated parts are not described.

### BRIEF DESCRIPTION OF DRAWINGS

FIG. 1 is a diagram of an MnF entity according to an embodiment of this application;
FIG. 2 is a diagram of a service-based management architecture according to an embodiment of this application;
FIG. 3A is a diagram of an architecture of an AI/ML capability according to this application;
FIG. 3B is a diagram of an architecture of another AI/ML capability according to an embodiment of this application;
FIG. 4A is a diagram of an architecture of another AI/ML capability according to an embodiment of this application;
FIG. 4B is a diagram of an architecture of another AI/ML capability according to an embodiment of this application;
FIG. 4C is a diagram of an architecture of another AI/ML capability according to an embodiment of this application;
FIG. 5A is a diagram of an architecture of another AI/ML capability according to an embodiment of this application;
FIG. 5B is a diagram of an architecture of another AI/ML capability according to an embodiment of this application;
FIG. 5C is a diagram of an architecture of another AI/ML capability according to an embodiment of this application;
FIG. 6 is an example flowchart of a method for managing and controlling a machine model inference capability according to an embodiment of this application;
FIG. 7 is an example flowchart of another method for managing and controlling a machine model inference capability according to an embodiment of this application;
FIG. 8 is an example flowchart of another method for managing and controlling a machine model inference capability according to an embodiment of this application;
FIG. 9 is an example flowchart of another method for managing and controlling a machine model inference capability according to an embodiment of this application;
FIG. 10 is a block diagram of a communication apparatus according to an embodiment of this application;
FIG. 11 is a block diagram of another communication apparatus according to an embodiment of this application;
FIG. 12 is a block diagram of another communication apparatus according to an embodiment of this application; and
FIG. 13 is a block diagram of another communication apparatus according to an embodiment of this application.

### DESCRIPTION OF EMBODIMENTS

To facilitate understanding of technical solutions provided in embodiments of this application, the following explains and describes technical terms in embodiments of this application.
(1) A use case (use case) is a technology for obtaining a requirement by using a scenario, and may also be referred to as an AI/ML inference type or an AI/ML inference function. This is not specifically limited in this application. The use case in embodiments of this application may include a self-organizing network (self-organizing network, SON) use case or a SON inference type. The SON inference type may include at least one of mobility robustness optimization (mobility robustness optimization, MRO), distributed mobility robustness optimization (distributed mobility robustness optimization, DMRO), energy saving (energy saving, ES), distributed energy saving (distributed energy saving, DES), mobility load balancing (mobility load balancing, MLB), or distributed mobility load balancing (distributed mobility load balancing, DMLB). The use case in embodiments of this application may include a radio access network intelligence (RAN intelligence) use case or a radio access network intelligence inference type. The radio access network intelligence inference type may include mobility optimization (mobility optimization, MRO), energy saving (network energy saving, NES), and load balancing (load balancing). The use case in embodiments of this application may further include a management data analysis (management data analytics, MDA) use case or an MDA inference type, for example, coverage problem analysis. For details, refer to an MDA type in clause 8.4 in 3GPP TS 28.104 V18.2.0. The details are not described in this application. The use case may further include a network data analytics function (network data analytics function, NWDAF) use case, an NWDAF inference type, or the like. For details, refer to the use case in 3GPP TS 23.288. The details are not described in this application.

Embodiments of this application may be applied to various mobile communication systems, for example, a new radio (new radio, NR) system, a long term evolution (long term evolution, LTE) system, an advanced long term evolution (advanced long term evolution, LTE-A) system, a future communication system, or another communication system. This is not limited in embodiments of this application. For example, embodiments in this application may be applied to an NR network management architecture. The NR network management architecture may include a management function (management function, MnF). The MnF is a management entity defined in the 3rd generation partnership project (3rd generation partnership project, 3GPP). Externally visible behavior and interfaces of the MnF are defined as management services (management services, MnSs). In a service-providing management architecture, the MnF can act as an MnS producer (producer) or an MnS consumer (consumer). An MnS produced by the MnS producer of the MnF may have a plurality of MnS consumers. The MnF may consume a plurality of management services from one or more management service producers.

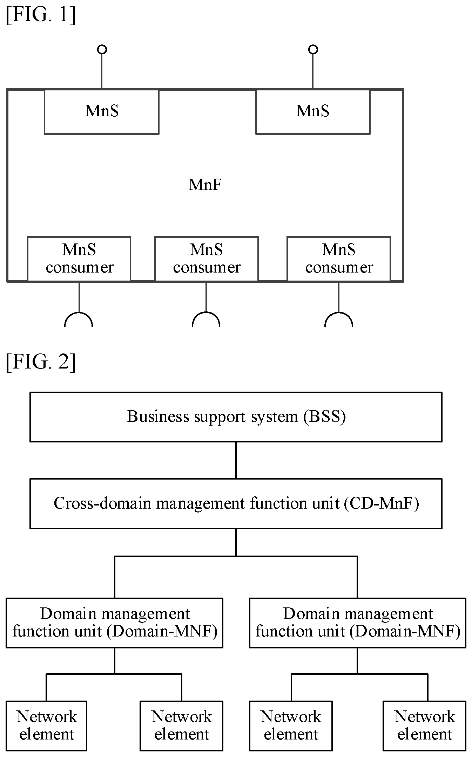

As shown in FIG. 1, the MnS provided by the MnF may be used to provide a service for another MnF (for example, denoted as an MnF #A). In this case, the MnF may be used as an MnS producer, and the MnF #A may be used as an MnS consumer. In addition, the MnF may further obtain, from another MnF (denoted as an MnF #B, which may be the same as or different from the MnF #A), a service provided by the MnF #B. In other words, in this case, the MnF shown in FIG. 1 may be used as an MnS consumer, and the MnF #B is used as an MnS producer. To be specific, a same MnF may be used as an MnS consumer or an MnS producer.

It should be understood that a graph of a circle or a graph of an arc shown in FIG. 1 may represent a service-based interface.

FIG. 2 is a diagram of a service-based management architecture to which an embodiment of this application is applicable. The service-based management architecture includes a business support system (business support system, BSS), a cross-domain management function (cross-domain management function, CD-MnF) unit, a domain management function (domain management function, Domain-MnF) unit, and a network element (network element, NE). In FIG. 2, two domain management function units and four network elements are used as an example.

If an MnS is an MnS provided by the cross-domain management function unit, the cross-domain management function unit is an MnS producer, and the business support system is an MnS consumer. If an MnS is an MnS provided by the domain management function unit, the domain management function unit is an MnS producer, and the cross-domain management function unit is an MnS consumer. If an MnS is an MnS provided by the network element, the network element is an MnS producer, and the domain management function unit is an MnS consumer. It should be understood that the MnS producer and the MnS consumer may alternatively be deployed in one entity, for example, deployed in the business support system, the cross-domain management function unit, the domain management function unit, or the network element.

In this embodiment of this application, the cross-domain management function unit may be configured to manage one or more domain management function units. The domain management function unit may be configured to manage one or more network elements. The following briefly describes the units.
(1) The business support system is a communication service (communication service)-oriented system, and is configured to provide functions and MnSs such as charging, settlement, accounting, customer service, business, network monitoring, communication service lifecycle management, and service intent translation. The business support system may be an operator operating system or a vertical industry operating system (vertical OT system).
(2) The cross-domain management function unit may be a network management entity such as a network management function (network management function, NMF) unit, a network function management service consumer (network function management service consumer, NFMS_C), an MnS producer, an MnS consumer, or a management data analytics (management data analytics, MDA) consumer. The cross-domain management function unit provides one or more of the following management functions or MnSs: lifecycle management of a network, deployment of a network, fault management of a network, performance management of a network, configuration management of a network, assurance of a network, an optimization function of a network, translation of a network intent from a service producer (intent from communication service provider, intent-CSP), and the like.

It should be understood that the "intent" in this embodiment of this application may be understood as an expectation for an intent producer (for example, the network element) and a system (for example, a network or a sub-network) in which the intent producer is located, and may include a requirement, a target, a constraint, or the like. Translation of the intent is a process of determining a policy for the intent. For example, the policy may be a condition indicating that the intent is not satisfied. For example, when the intent is energy saving, a policy A may be: When power consumption is greater than a first threshold, the power consumption is abnormal (that is, no energy is saved); and a policy B may be: When power consumption is greater than a second threshold, the power consumption is abnormal (that is, no energy is saved). It may be understood that even for a same intent, solutions that can satisfy the intent and that are determined by using different policies may be different.

The network indicated by the management function or the MnS may include one or more network elements or sub-networks, or may be a network slice. In other words, the network management function unit may be a network slice management function (network slice management function, NSMF) unit, a cross-domain management data analytics function (management data analytics function, MDAF) unit, a cross-domain self-organizing network function (self-organizing network function, SON Function), or a cross-domain intent driven management function (intent driven management service, intent driven MnS) unit.

Optionally, in some deployment scenarios, the cross-domain management function unit may further provide lifecycle management of a sub-network, deployment of a sub-network, fault management of a sub-network, performance management of a sub-network, configuration management of a sub-network, assurance of a sub-network, an optimization function of a sub-network, translation of a network intent from a service producer of a sub-network (intent-CSP), translation of a network intent from a service consumer of a sub-network (intent from communication service consumer, intent-CSC), or the like. The sub-network herein includes a plurality of small sub-networks, and may be a network slice sub-network.

(3) The domain management function unit may be a network element management entity such as an NMF, an element management system (element management system, EMS), a network function management service provider (network function management service provider, NFMS_P), a make before break automation engine (make before break automation engine, MAE), an MnS producer, an MnS consumer, or an MDA producer.

The domain management function unit may provide one or more of the following management functions or MnSs: lifecycle management of a sub-network or a network element, deployment of a sub-network or a network element, fault management of a sub-network or a network element, performance management of a sub-network or a network element, assurance of a sub-network or a network element, an optimization function of a sub-network or a network element, translation of an intent from a sub-network or a network element (intent from network operator, intent-NOP), or the like. The sub-network herein includes one or more network elements. The sub-network may further include a sub-network. In other words, one or more sub-networks form a larger sub-network.

Optionally, the sub-network herein may alternatively be a network slice sub-network. A domain management system may be a network slice sub-network management function (network slice subnet management function, NSSMF) unit, a domain management data analytics function (management data analytics function, domain MDAF) unit, a domain self-organizing network function (self-organizing network function, SON Function), a domain intent management function unit, or the like.

The domain management function unit may be classified in the following manners, including:
Based on network types, the domain management function unit may be classified into a radio access network (radio access network, RAN) domain management function unit (RAN domain management function, RAN domain MnF), a core network domain management function unit (core network domain management function, CN domain MnF), a transport network domain management function unit (transport network domain management function, TN domain MnF), and the like. It should be noted that the domain management function unit may alternatively be a domain network management system, and may manage one or more of an access network, a core network, or a transport network. The transport network is a network used to provide signal transmission and conversion, and is a basic network of a switching network, a data network, and a support network.

Based on administrative regions, the domain management function unit may be classified into a domain management function unit of a region, for example, a domain management function unit of a city A or a domain management function unit of a city B.

(4) The network element is an entity that provides a network service, and includes a core network element, a radio access network element, a transport network element, or the like. For example, in the architecture shown in FIG. 2, the domain management function unit may include a radio access network domain management function unit, a core network element domain management function unit, or a transport network domain management function unit. The radio access network domain management function unit may be configured to manage the radio access network element. The core network element domain management function unit may be configured to manage the core network element. The transport network domain management function unit may be configured to manage the transport network element.

For example, the core network element may include but is not limited to an access and mobility management function (access and mobility management function, AMF) network element, a session management function (session management function, SMF) network element, a policy control function (policy control function, PCF) network element, a network data analytics (network data analytical function, NWDAF) network element, a network repository function (network repository function, NRF) network element, a gateway, and the like.

The radio access network element may include but is not limited to various types of base stations (for example, a next generation NodeB (generation NodeB, gNB) and an evolved NodeB (evolved NodeB, eNB)), a central unit control panel (central unit control panel, CUCP), a central unit (central unit, CU), a distributed unit (distributed unit, DU), a central unit user plane (central unit user panel, CUUP), and the like.

It should be understood that the network function in this embodiment of this application is also referred to as a network element, an entity, or the like.

The network element may provide one or more of the following management functions or MnSs: lifecycle management of the network element, deployment of the network element, fault management of the network element, performance management of the network element, assurance of the network element, an optimization function of the network element, translation of an intent from the network element, and the like.

AI/ML technologies and related applications are increasingly being used in a wider range of industries. AI/ML capabilities are also used in various fields of 5GS, including intelligent optimization use cases applied to RAN base stations, such as mobility load balancing (mobility load balancing, MLB), mobility robustness optimization (mobility robustness optimization, MRO), and energy saving (energy saving, ES); management data analysis services applied to a network management system, such as management data analytics (management data analytics, MDA); and network data analysis services applied to a core network, such as a network data analytics function (network data analytics function, NWDAF).

Currently, an AI/ML management workflow is defined, including a training phase, an emulation phase, a deployment phase, and an inference phase.

In the training phase, one ML model or a group of ML models are trained, and the phase includes initial training and retraining. The phase also includes validation of an ML entity to evaluate performance of the ML entity in training data and validating data. If a validation result does not meet an expectation, for example, a variance is unacceptable, an ML model associated with the ML entity needs to be retrained. The training phase is an initial phase of the AI/ML management workflow.

In the emulation phase, an ML entity for inference is run in an emulation environment. The purpose is to evaluate inference performance of the ML entity in the emulation environment prior to applying the ML entity to a target network or system.

The deployment phase is a process of making a trained ML entity available for use at a target AI/ML inference function.

The inference phase is a process of performing inference using an ML entity by an AI/ML inference function.

Currently, the use of AI/ML technologies to enable RAN intelligence (intelligence) has been defined in TR 37.817 and TS 38.300. Specifically, the AI/ML technologies are used to support NES (Network Energy Saving), LB (Load balancing), and MO (Mobility Optimization). The standard discussions also define scenarios for supporting and managing RAN intelligence inference types on a network management system. In some embodiments, the RAN intelligence inference types may include at least one of distributed MRO (Distributed Mobility Robustness Optimization, DMRO), distributed ES (Distributed Energy Saving, DES), distributed MLB (Distributed Mobility Load Balancing, DMLB), mobility optimization (mobility optimization, MO), network energy saving (network energy saving, NES), and load balancing (load balancing, LB). Specific management information includes switch management and policy management for the RAN intelligence inference types. In particular, a cross-domain management node may configure switches and execution policies for specific use cases.

However, the current standard only addresses switch management and execution policy management for the RAN intelligence inference types, without providing management of AI/ML capabilities of RAN intelligence.

In view of this, embodiments of this application provide a method for managing and controlling a machine model inference capability. In the method, a first communication apparatus may receive first information from a second communication apparatus, where the first information includes an AI/ML capability corresponding to AI/ML inference. The first communication apparatus may perform the AI/ML inference of the AI/ML capability, to obtain an inference result. The first communication apparatus may send the inference result to the second communication apparatus. Based on this solution, the first communication apparatus may manage and control the AI/ML capability by using the first information, and enable the second communication apparatus to perform the AI/ML inference of the AI/ML capability based on the first information.

It should be noted that the term "AI/ML" in this application may be replaced with "AI", "ML", "AIML", or the like. AI/ML may be understood as AI and ML, may be understood as AI or ML, or may be understood as AI and/or ML.

To facilitate understanding of the technical solutions provided in embodiments of this application, the following explains and describes the AI/ML capability.

The AI/ML capability in embodiments of this application may be understood as an AI/ML inference capability and an AI/ML inference emulation capability.

It should be noted that a specific name of the AI/ML inference capability is not limited in this application. For example, the AI/ML inference capability may also be referred to as an ML inference capability, an AI inference capability, or another name. The AI/ML inference emulation capability may also be referred to as an ML inference emulation capability, an AI inference emulation capability, an ML emulation capability, an AI emulation capability, or another name.

In a possible case, the AI/ML capability in embodiments of this application may include one or more of the following: a traffic analysis capability, a coverage analysis capability, a mobility analysis capability, a load analysis capability, a fault analysis capability, a network slice throughput analysis capability, a slice load analysis capability, a network slice traffic prediction analysis capability, a service experience analysis capability, an energy efficiency analysis capability, or an energy consumption analysis capability.

It should be noted that the AI/ML capability herein may alternatively be a vendor-specific capability. This is not limited herein in this application.

It should be further noted that the AI/ML capability herein may be understood as an inference capability and/or an emulation capability of an AI/ML inference type. To be specific, the second communication apparatus may train an ML model based on the AI/ML capability, and then apply the ML model to the AI/ML inference type, to complete an AI/ML inference function corresponding to the AI/ML inference type. For example, the AI/ML inference type is MRO in a SON. As an AI/ML inference function, the MRO may perform inference by using a mobility analysis ML model trained by using a mobility analysis capability, to obtain an inference result, and then perform an MRO function by using the inference result. Similarly, for AI/ML capabilities of other inference types, refer to the foregoing descriptions. Details are not described herein again.

It should be further noted that, in embodiments of this application, the AI/ML inference emulation capability may be understood as performing emulation of an AI/ML inference type, or performing emulation of an AI/ML inference capability. Emulation of an AI/ML inference capability is running an ML model used for inference in an emulation environment, where the ML model is an ML model corresponding to the AI/ML capability, or may be understood as that the ML model is an ML model obtained through training for the AI/ML capability, so that analysis or optimization performance of the ML model in the emulation environment can be evaluated prior to applying the ML model to a target inference type and further to a live network. Emulation of an AI/ML inference type is running the inference type in an emulation environment, so that analysis or optimization performance of the inference type in the emulation environment can be evaluated prior to further applying the inference type to a live network. For example, the AI/ML inference type is MRO in a SON. As an AI/ML inference function, the MRO may perform inference emulation by using a mobility analysis ML model trained by using a mobility analysis capability, to obtain an inference emulation result, and optionally, continue to perform emulation of an MRO function by using the inference emulation result. Similarly, for AI/ML inference emulation capabilities of other inference types, refer to the foregoing descriptions. Details are not described herein again.

The AI/ML capabilities shown above are explained and described below.

The traffic analysis capability may be manifested as an ML model having a traffic analysis function. It may also be understood that traffic analysis inference may be performed. That is, the ML model for traffic analysis is used to perform inference, and the ML model having the traffic analysis function may perform analysis of traffic indicators. The analysis of the traffic indicators may include traffic problem identification (for example, traffic congestion), statistics collection of traffic-related indicators, or prediction of traffic-related indicators.

The coverage analysis capability may be manifested as an ML model having a coverage analysis function. It may also be understood that coverage analysis inference may be performed. That is, the ML model for coverage analysis is used to perform inference, and the ML model having the coverage analysis function may perform analysis of coverage indicators. The analysis of the coverage indicators may include coverage problem identification (for example, weak coverage, over coverage, a coverage hole, and overshoot coverage), statistics collection of coverage-related indicators, or prediction of coverage-related indicators.

The mobility analysis capability may be manifested as an ML model having a mobility analysis function. It may also be understood that mobility analysis inference may be performed. That is, the ML model for mobility analysis is used to perform inference, and the ML model having the mobility analysis function may perform analysis of mobility indicators. The analysis of the mobility indicators may include mobility problem identification (for example, too early handover, too late handover, or handover to a wrong cell), statistics collection of mobility-related indicators, or prediction of mobility-related indicators.

The load analysis capability may be manifested as an ML model having a load analysis function. It may also be understood that load analysis inference may be performed. That is, the ML model for load analysis is used to perform inference, and the ML model having the load analysis function may perform analysis of load indicators. The analysis of the load indicators may include load problem identification (for example, heavy load or light load), statistics collection of load-related indicators, or prediction of load-related indicators.

The fault analysis capability may be manifested as an ML model having a fault analysis function. It may also be understood that fault analysis inference may be performed. That is, the ML model having the fault analysis function is used to perform inference, and the ML model having the fault analysis function may perform analysis of fault indicators. The analysis of the fault indicators may include fault problem identification (for example, network alarms), statistics collection of fault-related indicators, or prediction of fault-related indicators.

The network slice throughput analysis capability may be manifested as an ML model having a network slice throughput analysis function. It may also be understood that network slice throughput analysis inference may be performed. That is, the ML model having the network slice throughput analysis function is used to perform inference, and the ML model having the network slice throughput analysis function may perform analysis of network slice throughput indicators. The analysis of the network slice throughput indicators may include network slice throughput problem identification (for example, a throughput decrease), statistics collection of network slice throughput-related indicators, or prediction of network slice throughput-related indicators.

The slice load analysis capability may be manifested as an ML model having a slice load analysis function. It may also be understood that slice load analysis inference may be performed. That is, the ML model having the slice load analysis function is used to perform inference, and the ML model having the slice load analysis function may perform analysis of slice load indicators. The analysis of the slice load indicators may include slice load problem identification (for example, degradation of key performance indicators (key performance indicators, KPIs)), statistics collection of slice load-related indicators, or prediction of slice load-related indicators.

The network slice traffic prediction analysis capability may be manifested as an ML model having a network slice traffic prediction analysis function. It may also be understood that network slice traffic prediction analysis inference may be performed. That is, the ML model having the network slice traffic prediction analysis function is used to perform inference, and the ML model having the network slice traffic prediction analysis function may perform analysis of network slice traffic prediction indicators. The analysis of the network slice traffic prediction indicators may include network slice traffic prediction problem identification, statistics collection of network slice traffic prediction-related indicators, or prediction of network slice traffic prediction-related indicators.

The service experience analysis capability may be manifested as an ML model having a service experience analysis function. It may also be understood that service experience analysis inference may be performed. That is, the ML model having the service experience analysis function is used to perform inference, and the ML model having the service experience analysis function may perform analysis of service experience indicators. The analysis of the service experience indicators may include service experience problem identification, statistics collection of service experience-related indicators, or prediction of service experience-related indicators.

The energy efficiency analysis capability may be manifested as an ML model having an energy efficiency analysis function. It may also be understood that energy efficiency analysis inference may be performed. That is, the ML model having the energy efficiency analysis function is used to perform inference, and the ML model having the energy efficiency analysis function may perform analysis of energy efficiency indicators. The analysis of the energy efficiency indicators may include energy efficiency problem identification (for example, high energy efficiency or low energy efficiency), statistics collection of energy efficiency-related indicators, or prediction of energy efficiency-related indicators.

The energy consumption analysis capability may be manifested as an ML model having an energy consumption analysis function. It may also be understood that energy consumption analysis inference may be performed. That is, the ML model having the energy consumption analysis function is used to perform inference, and the ML model having the energy consumption analysis function may perform analysis of energy consumption indicators. The analysis of the energy consumption indicators may include energy consumption problem identification (for example, high energy consumption or low energy consumption), statistics collection of energy consumption-related indicators, or prediction of energy consumption-related indicators.

In another possible case, the AI/ML capability in embodiments of this application may be defined as one or more of AI/ML inference types included in MDA. For the AI/ML inference types, refer to inference types (InferenceType) defined in clause 7.5.1 in 3GPP TS 28.105 V18.2.0, for example, coverage analysis and mobility performance analysis. For details, refer to AI/ML inference types of MDA defined in clause 8.4 in 3GPP TS 28.104 V18.2.0. The details are not described in this application. The AI/ML capability in embodiments of this application may be further defined as one or more of SON inference types, for example, MRO, MLB, and ES. For details, refer to use cases defined in clause 7 in 3GPP TS 28.313 V17.9.0 or use cases defined in clause 5.1 in TS 28.310 V18.4.0. The details are not described in this application. The AI/ML capability in embodiments of this application may be further defined as one or more of RAN intelligent inference types, for example, MO, MLB, and ES. For details, refer to use cases defined in 3GPP TS 38.300. The details are not described in this application.

The AI/ML capability in embodiments of this application may be further defined as one or more of AI/ML inference types included in an NWDAF, for example, slice load analytics and user data congestion analytics. For details, refer to use cases defined in clause 6 in 3GPP TS 23.288 V18.4.0. The details are not described in this application.

In embodiments of this application, the AI/ML capability may be universal. In other words, the AI/ML capability is available for all use cases, that is, all AI/ML inference types may share one or more AI/ML capabilities. Alternatively, in embodiments of this application, the AI/ML capability may be at a granularity of a use case. In other words, each AI/ML inference type has a respective AI/ML capability. The two examples of the AI/ML capability are described below respectively.

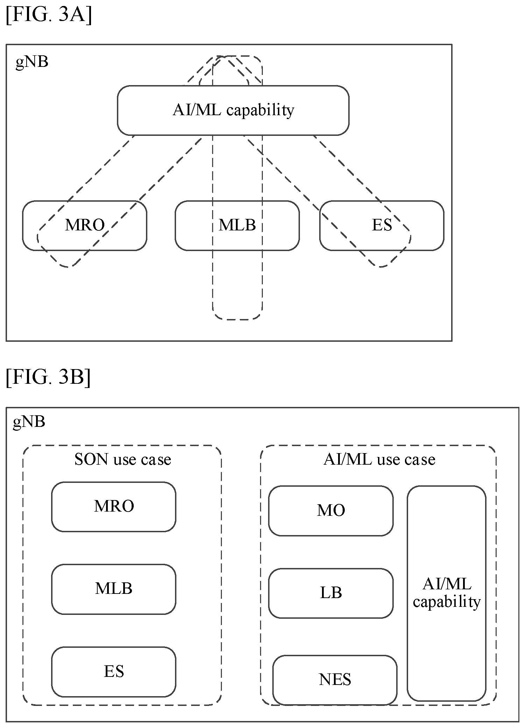

For example, the AI/ML capability is universal. In an example, the universal AI/ML capability may be attached to each use case. In other words, each use case may use the universal AI/ML capability to perform inference. FIG. 3A is described by using SON use cases as an example. An AI/ML capability may be coupled to the SON use cases, and the AI/ML capability may be attached to the SON use cases. Each SON use case may use the AI/ML capability to perform inference.

In another example, the universal AI/ML capability may be embedded in each use case, and each use case having the AI/ML capability may be used as a new use case. FIG. 3B is described by using SON use cases as an example. An AI/ML capability is not coupled to the SON use cases, and the AI/ML capability may be embedded in each use case, so that the use case is used as a new use case. As shown in FIG. 3B, MRO, MLB, and ES are SON use cases that do not have the AI/ML capability, and mobility optimization (mobility optimization, MO), load balancing (load balancing, LB), and network energy saving (network energy saving, NES) are SON use cases that have the AI/ML capability. The MO may be understood as MRO having the AI/ML capability, the LB may be understood as MLB having the AI/ML capability, and the NES may be understood as ES having the AI/ML capability.

It should be noted that the use cases having the AI/ML capability in FIG. 3B, for example, the MO, the LB, and the NES, are merely shown as examples, and do not constitute a limitation on a name of a use case having the AI/ML capability.

For example, the universal AI/ML capability may also be attached to an MDA use case, and the MDA use case may be deployed in a domain management function unit.

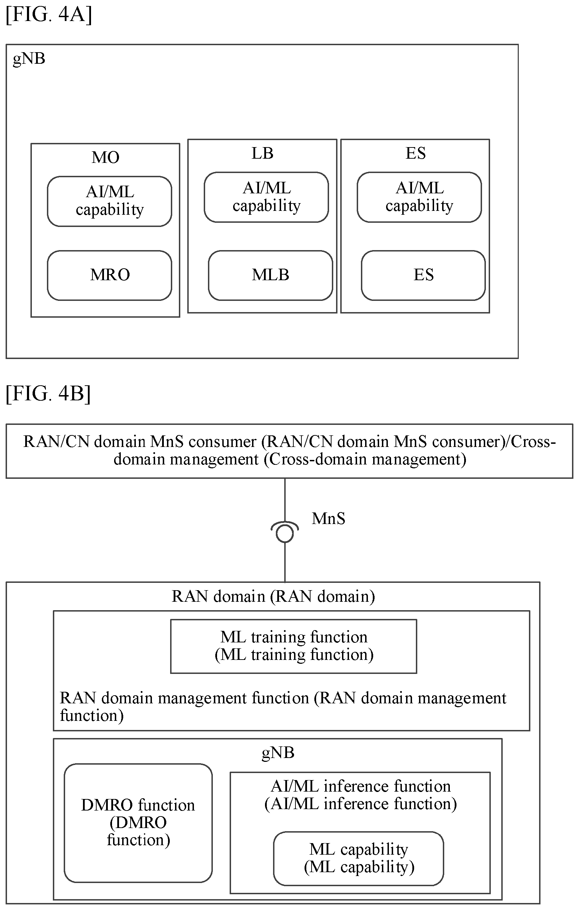

For example, the AI/ML capability is at a granularity of a use case. In an example, the universal AI/ML capability may be attached to each use case. FIG. 4A is described by using SON use cases as an example. AI/ML capabilities may be coupled to the SON use cases, and the AI/ML capabilities may be attached to the SON use cases. The AI/ML capabilities are at a granularity of a use case (case specific).

For example, in the SON use cases, MRO may support an AI/ML capability, and the AI/ML capability of the MRO may include one or more of the following: a traffic analysis capability or a mobility analysis capability.

For example, in the SON use cases, MLB may support an AI/ML capability, and the AI/ML capability of the MLB may include a load analysis capability.

For example, in the SON use cases, ES may support an AI/ML capability, and the AI/ML capability of the ES may include one or more of the following: an energy efficiency analysis capability, an energy consumption analysis capability, or a traffic analysis capability.

The following describes a deployment manner of the AI/ML capability attached to each use case.

FIG. 4B is described by using distributed MRO (DMRO) use cases as an example. FIG. 4B shows positions of a training function, an inference function, and a DMRO function. FIG. 4B is described by using an example in which a cross-domain management function system is used as a service consumer of a domain management function system and a domain management function unit is a RAN domain management function system. The RAN domain management function system may include a gNB and a RAN domain management function. The AI/ML training function may be deployed in the RAN domain management function, the DRMO function and the AI/ML inference function may be deployed in the gNB, and the AI/ML capability may be deployed in the AI/ML inference function. An MnS interface between the cross-domain management function system and the domain management function system is a to-be-standardized interface, and is referred to as a management service-based interface. Similarly, similar deployment may be performed on other optimization functions supported by the gNB, for example, DMLB and DES.

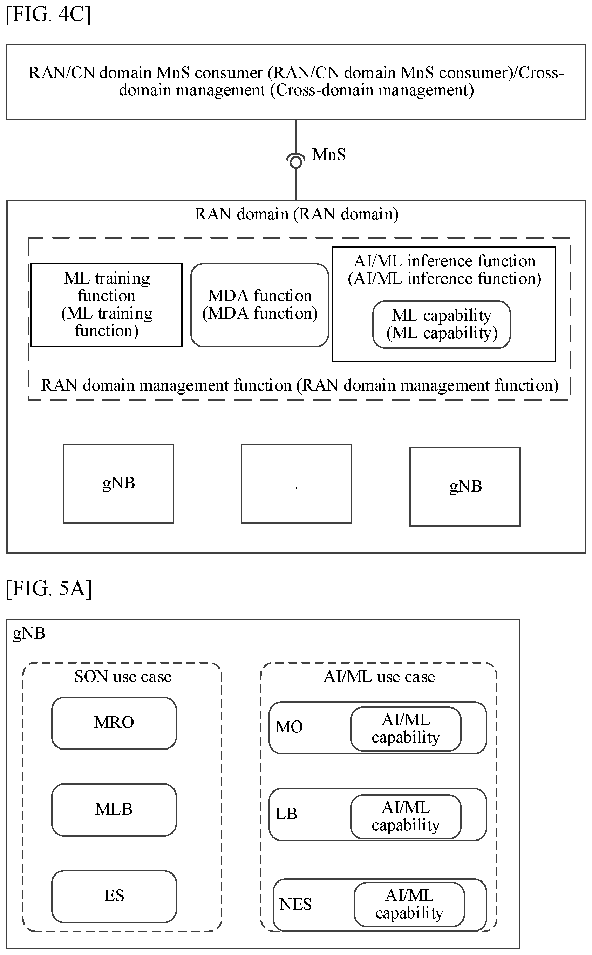

FIG. 4C is described by using MDAF use cases as an example. FIG. 4C shows positions of a training function, an inference function, and an MDA function. The topmost box in the figure is a cross-domain management system (RAN/CN domain MnS consumer/Cross domain management). In other words, FIG. 4C is described by using an example in which a cross-domain management function system is used as a service consumer of a domain management function system and a domain management function unit is a RAN domain management function system. The RAN domain management function system may include a gNB and a RAN domain management function. The AI/ML training function, the AI/ML inference function, and the MDA function are deployed in the RAN domain management function, and the AI/ML capability is deployed in the AI/ML inference function. An MnS interface between the cross-domain management function system and the domain management function system is a to-be-standardized interface, and is referred to as a management service-based interface. Similarly, similar deployment may be performed on other MDA functions, NWDAF functions, and the like supported by the RAN domain management function.

In another example, the AI/ML capability is embedded in each use case. FIG. 5A is described by using SON use cases as an example. AI/ML capabilities are not coupled to the SON use cases, and the AI/ML capabilities are embedded in use cases. As shown in FIG. 5A, MRO, MLB, and ES are SON use cases that do not have an AI/ML capability, and mobility optimization (mobility optimization, MO), load balancing (load balancing, LB), and network energy saving (network energy saving, NES) have an AI/ML capability, therefore may be used as new use cases or functions, and coexist with MRO, MLB, and ES in a related technology. The MO may be understood as MRO having an AI/ML capability, the LB may be understood as MLB having an AI/ML capability, and the NES may be understood as ES having an AI/ML capability. In FIG. 5A, the AI/ML capabilities are at a granularity of a use case (case specific).

It should be noted that the use cases having the AI/ML capability in FIG. 5A, for example, the MO, the LB, and the NES, are merely shown as examples, and do not constitute a limitation on a name of a use case having the AI/ML capability.

The following describes a deployment manner of the AI/ML capability embedded in each use case.

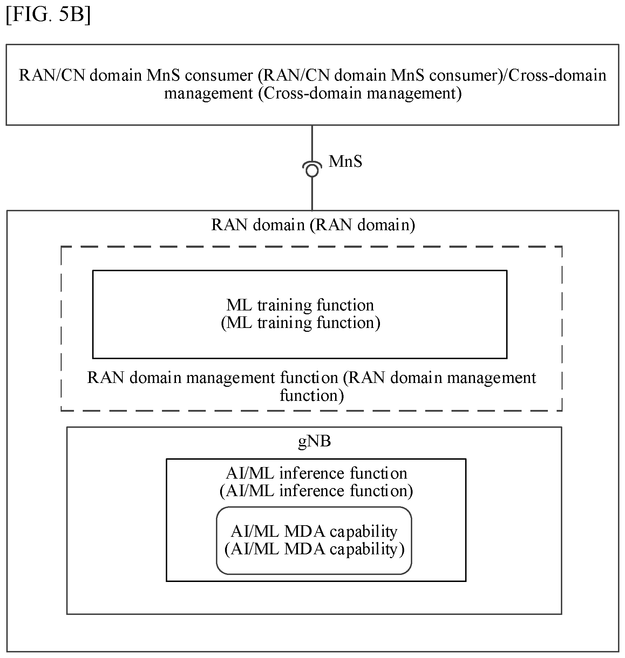

FIG. 5B is described by using MRO as an example. A difference between the deployment manner in FIG. 5B and the deployment manner in FIG. 4B lies in that the AI/ML capability is embedded in MO. That is, an AI/ML DMRO capability (AIMLDMROCapability) is a new capability that can be independent, or may be referred to as a function, and coexists with a DMRO function in a related technology. It should be noted that, in this scenario, it may be understood that the MO is embedded with an AI/ML capability exclusive to the MO, the LB is embedded with an AI/ML capability exclusive to the LB, and the NES is embedded with an AI/ML capability exclusive to the NES.

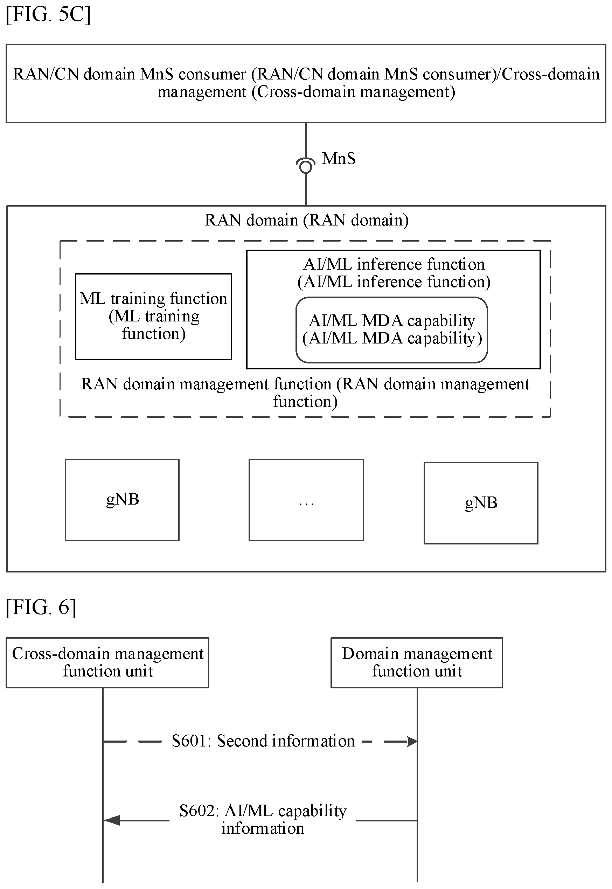

FIG. 5C is described by using MDA use cases as an example. A difference between the deployment manner in FIG. 5C and the deployment manner in FIG. 4C lies in that the AIML capability is embedded in MDA. That is, an AI/ML MDA capability (AIMLMDACapability) is a new capability that can be independent, or may be referred to as a function, and coexists with an MDA function in a related technology. The AI/ML MDA capability (AIMLMDACapability) herein may be one or more of MDA types. This is not specifically limited in this application. For example, the AI/ML MDA capability (AIMLMDACapability) may be an AI/ML MDA coverage analysis capability (AIMLMDACoverageAnalysisCapabiltiy). For the MDA type, refer to a type definition in 3GPP TS 28.104. Details are not described in this application.

The following describes the method for managing and controlling a machine model inference capability according to an embodiment of this application. Embodiments of this application are applicable to a scenario in which both a training function and an inference function are deployed on a domain management function unit, for example, MDA, applicable to a scenario in which a training function is deployed on a domain management function unit and an inference function is deployed on a base station, for example, a SON or RAN intelligence (intelligence), applicable to a scenario in which both a training function and an inference function are deployed on a base station, for example, a SON or RAN intelligence (intelligence), or applicable to a scenario in which training is deployed on a cross-domain management function unit and an inference function is deployed on a management function unit or a base station. For details, refer to function management scenarios defined clause 4a.2 in 3GPP TS 28.105 V18.2.0. The details are not described in this application. In the foregoing scenarios, the cross-domain management function unit may be used as a service consumer of the domain management function unit, and manage and control functions in the domain management function unit.

In embodiments of this application, the first communication apparatus may be an AI/ML MnS consumer, or a component (for example, a chip or a chip system) in an AI/ML MnS consumer. The second communication apparatus may be an AI/ML MnS producer, or a component (for example, a chip or a chip system) in an AI/ML MnS producer. The first communication apparatus and the communication apparatus may be deployed in different entities, or may be deployed in a same entity, as shown in FIG. 1. To facilitate understanding of embodiments of this application, an example in which the first communication apparatus and the second communication apparatus are deployed in different entities is used below. It may be understood that, in embodiments of this application, a role that provides an AI/ML capability management service (management service, MnS) is referred to as a producer (producer), and a role that invokes the AI/ML capability management service is referred to as a consumer (consumer).

If the first communication apparatus is the cross-domain management function unit in FIG. 2, the second communication apparatus may be the domain management function unit in FIG. 2. For descriptions of the cross-domain management function unit and the domain management function unit, refer to related content in FIG. 2. Details are not described herein again.

FIG. 6 is an example flowchart of a method for managing and controlling a machine model inference capability according to an embodiment of this application. The following operations may be included.

S601: A cross-domain management function unit sends second information to a domain management function unit.

S601 is an optional step, and is shown by a dashed line in FIG. 6.

Correspondingly, the domain management function unit receives the second information from the cross-domain management function unit.

The second information is used to request to obtain AI/ML capability information of the domain management function unit. It may be understood that the AI/ML capability information of the domain management function unit may be understood as information about an AI/ML capability that the domain management function unit can support. In some embodiments, the AI/ML capability information of the domain management function unit may alternatively be understood as a type of an AI/ML capability that the domain management function unit can support.

In a possible case, the second information may be used to request or indicate the domain management function unit to send the AI/ML capability information. It may be understood that, in this case, the second information may be used to request AI/ML capability information supported by all AI/ML inference types.

In another possible case, the second information may be used to request or indicate the domain management function unit to send AI/ML capability information supported by a first AI/ML inference type. It may be understood that the second information includes the first AI/ML inference type.

It should be noted that the first AI/ML inference type includes at least one of the following: an MDA inference type, a SON inference type, an NWDAF inference type, or a radio access network intelligence (RAN intelligence) inference type. For specific definitions of the AI/ML inference types, refer to inference types (InferenceType) defined in clause 7.5.1 in 3GPP TS 28.105 V18.2.0.

In some embodiments, the MDA inference type may include at least one of types such as energy saving analysis, coverage problem analysis, fault analysis, network slice throughput analysis, slice load analysis, network slice traffic prediction analysis, service experience analysis, congestion traffic analysis, mobility performance analysis, or handover optimization analysis. For specific types, refer to definitions in clause 8.4 in TS 28.104. Details are not described herein.

In some embodiments, the SON inference type may include at least one of the following types: MRO, DMRO, ES, DES, MLB, and DMLB. For specific types, refer to definitions in clause 7 in TS 28.313. Details are not described herein.

In some embodiments, the NWDAF inference type may include at least one of types such as slice load analysis, network performance analysis, and user data congestion analysis. For specific types, refer to use cases defined in clauses 6.5 to 6.21 in TS 23.288. Details are not described herein.

In some embodiments, the RAN intelligence inference type includes at least one of the following types: MO, NES, and LB. For specific types, refer to definitions in clause "Support of AI/ML for NG-RAN" in TS 38.300 or definitions in clause 5 in TR 37.817. Details are not described herein.

For example, the second information may be used to request or indicate the domain management function unit to send AI/ML capability information supported by the SON inference type (for example, MRO (MO), MLB (LB), or ES (NES)). For another example, the second information may be used to request or indicate the domain management function unit to send AI/ML capability information supported by the MDA inference type (for example, coverage problem analysis or fault analysis). For another example, the second information may be used to request or indicate the domain management function unit to send AI/ML capability information supported by the NWDAF inference type.

S602: The domain management function unit sends the AI/ML capability information to the cross-domain management function unit.

Correspondingly, the cross-domain management function unit receives the AI/ML capability information from the domain management function unit.

It should be noted that, the AI/ML capability information is used to manage and control one or more AI/ML capabilities. It may be understood that the management and control may be that the cross-domain management function unit triggers, based on the received AI/ML capability information, inference or emulation of the AI/ML capability of the domain management function unit, or triggers inference or emulation of an AI/ML inference type of the domain management function unit. It should be further noted that, the inference of the AI/ML capability herein may be understood as training an ML model based on the AI/ML capability, and then applying the ML model to an AI/ML inference type, to complete an AI/ML inference function corresponding to the AI/ML inference type.

The AI/ML capability information may be understood as information about an AI/ML capability supported or possessed by the domain management function unit. In other words, in S602, the domain management function unit may indicate, to the cross-domain management function unit, the AI/ML capability supported or possessed by the domain management function unit. Alternatively, the AI/ML capability information may be understood as information about an AI/ML capability supported or possessed by an AI/ML inference type in the domain management function unit. It may be understood that the AI/ML capability may be universal to all AI/ML inference types or may be at a granularity of per AI/ML inference type. For details, refer to the foregoing related descriptions. The details are not described herein again. In some embodiments, the AI/ML capability information of the domain management function unit may alternatively be understood as a type of an AI/ML capability that the domain management function unit can support.

It may be understood that the AI/ML capability information includes the AI/ML capability. In some embodiments, the AI/ML capability includes one or more of the following: a traffic analysis capability, a coverage analysis capability, a mobility analysis capability, a load analysis capability, a fault analysis capability, a network slice throughput analysis capability, a slice load analysis capability, a network slice traffic prediction analysis capability, a service experience analysis capability, an energy efficiency analysis capability, or an energy consumption analysis capability. Optionally, the AI/ML capability may be represented by using a character string, or may be represented by using a customized identifier. This is not limited in this application. It should be further noted that the AI/ML capability may alternatively be vendor-specific. This is not limited in this application. It should be further noted that the AI/ML capability may be used as an AI/ML inference capability, or may be used as an AI/ML emulation capability.

Optionally, the AI/ML capability information may further include an AI/ML inference type. The AI/ML inference type herein may also be understood as an applicable AI/ML inference function. In some embodiments, the AI/ML inference type includes at least one of the following: an MDA inference type, a SON inference type, an NWDAF inference type, or a radio access network intelligence (RAN intelligence) inference type. For specific definitions of the AI/ML inference types, refer to inference types (InferenceType) defined in clause 7.5.1 in 3GPP TS 28.105 V18.2.0.

In a possible implementation, in FIG. 6, if S601 is performed, and the second information is used to request the domain management function unit to send the AI/ML capability information, in other words, the second information does not carry an AI/ML inference type, it may be considered that the cross-domain management function unit requests AI/ML capability information supported by all AI/ML inference types of the domain management function unit. In this case, the domain management function unit may send all AI/ML capability information, for example, all AI/ML capabilities, to the cross-domain management function unit. For the AI/ML capability herein, refer to the AI/ML capability described above. Details are not described herein again. Optionally, in this possible implementation, the domain management function unit may send, to the cross-domain management function unit, an AI/ML inference type to which the AI/ML capability information is applicable. In other words, the domain management function unit may indicate, to the cross-domain management function unit, an AI/ML inference type for which the AI/ML capability in the sent AI/ML capability information may be used. For the AI/ML inference type herein, refer to the AI/ML inference type described above. Details are not described herein again. For example, the AI/ML capability sent by the domain management function unit to the cross-domain management function unit includes a load analysis capability, and the domain management function unit may send, to the cross-domain management function unit, the AI/ML inference type to which the AI/ML capability is applicable, for example, ES (NES). In other words, the domain management function unit may indicate, to the cross-domain management function unit, that the load analysis capability may be used for ES (NES).

In another possible implementation, in FIG. 6, if S601 is performed, and the second information is used to request the domain management function unit to send the AI/ML capability information of the first AI/ML inference type, in other words, the second information carries the first AI/ML inference type, the domain management function unit may send the AI/ML capability information of the first AI/ML inference type to the cross-domain management function unit. It may be understood that, for the first AI/ML inference type, refer to the implementation in S601. Details are not described herein again.

In still another possible implementation, in FIG. 6, if S601 is not performed, the domain management function unit may send all capability information, for example, all AI/ML capabilities, to the cross-domain management function unit in S602. For the AI/ML capability herein, refer to the AI/ML capability described above. Details are not described herein again. Optionally, in this possible implementation, the domain management function unit may send, to the cross-domain management function unit, an AI/ML inference type to which the AI/ML capability information is applicable. In other words, the domain management function unit may indicate, to the cross-domain management function unit, an AI/ML inference type for which the AI/ML capability in the sent AI/ML capability information may be used. For the AI/ML inference type herein, refer to the AI/ML inference type described above. Details are not described herein again. For example, the AI/ML capability sent by the domain management function unit to the cross-domain management function unit includes a load analysis capability, and the domain management function unit may send, to the cross-domain management function unit, the AI/ML inference type to which the AI/ML capability is applicable, for example, ES (NES). In other words, the domain management function unit may indicate, to the cross-domain management function unit, that the load analysis capability may be used for ES (NES).

In an example, requesting and reporting of the capability information shown in FIG. 6 may be implemented by using an existing object class (information object class, IOC), for example, including a DMRO function (DMROFunction), a DLBO function (DLBOFunction), a DES function (DESManagementFunction), an AI/ML inference capability (AiMlInferenceCapability), an AI/ML capability of ES (AiMlESCapability), an AI/ML capability of MO (AiMlMOCapability), an AI/ML capability of LB (AiMlLBCapability), an MDA function (MDAFunction), an MDS request (MDARequest), an AnLF function (AnLFFunction), or the like, or may be implemented by using a newly defined object class (for example, SONFunction). Alternatively, the capability information may be implemented by using a newly defined data type (for example, aIMLManagementInfomation). This is not limited in this application.

For example, the following separately describes attributes of the foregoing several object classes.

**Table 1: Example of attributes of a DMRO function (DMROFunction <<IOC>>)**

| Attribute (Attribute name) | Definition (Definition) |
|---|---|
| DMRO control (dmroControl) | Refer to 3GPP TS 28.541, and details are not described herein. |
| maximumDeviationHoTriggerLow | Refer to 3GPP TS 28.541, and details are not described herein. |
| maximumDeviationHoTriggerHigh | Refer to 3GPP TS 28.541, and details are not described herein. |
| minimumTimeBetweenHoTriggerChange | |
| tstoreUEcntxt | Refer to 3GPP TS 28.541, and details are not described herein. |
| Supported AI/ML inference capabilities (supportedMLinferenceCapabilityList) | A list that is used by a producer to indicate supported AI/ML inference capabilities to a consumer, which may also be understood as AI/ML inference capabilities that MRO use cases can support, or optionally may be understood as universal AI/ML inference capabilities that are supported. |
| Supported AI/ML emulation capabilities (supportedMLEmulationCapabilityList) | A list that is used by a producer to indicate supported AI/ML emulation capabilities to a consumer, which may also be understood as AI/ML emulation capabilities that MRO use cases can support, or optionally may be understood as universal AI/ML emulation capabilities that are supported. |

Table 1 shows relevant attributes of the DMRO function.

For example, in S602, the domain management function unit may send AI/ML capability information of DMRO to the cross-domain management function unit based on the attributes shown in Table 1. For example, the domain management function unit may indicate, to the cross-domain management function unit based on the attribute of 'supported AI/ML inference capabilities (supportedMLInferenceCapabilityList)', AI/ML inference capabilities supported by the DMRO. For example, the domain management function unit may indicate, to the cross-domain management function unit based on the attribute of 'supported AI/ML emulation capabilities (supportedMLEmulationCapabilityList)', AI/ML emulation capabilities supported by the DMRO.

Similarly, for relevant attributes of the DLBO function (DLBOFunction) and (DESManagementFunction), refer to the implementation in Table 1. Details are not described in this application.

According to Table 1, the domain management function unit may indicate AI/ML capability information of one or more inference types to the cross-domain management function unit.

It should be noted that Table 1 shows a case in which the AI/ML inference capability and the AI/ML emulation capability coexist. Actually, the AI/ML inference capability and the AI/ML emulation capability may not coexist. In other words, the DMRO function may support only the AI/ML inference capability or only the AI/ML emulation capability. Similarly, in the following tables, the AI/ML inference capability and the AI/ML emulation capability may coexist or may not coexist, and details are not described again.

**Table 2: Example of attributes of an AI/ML inference function of a SON (SONFunction <<IOC>>)**

| Attribute (Attribute name) | Definition (Definition) |
|---|---|
| Supported AI/ML inference capabilities (supportedMLInferenceCapabilityList) | A list that is used by a producer to indicate supported AI/ML inference capabilities to a consumer, which may also be understood as AI/ML inference capabilities that SON use cases can support, or optionally may be understood as universal AI/ML inference capabilities that are supported. |
| Supported AI/ML emulation capabilities (supportedMLEmulationCapabilityList) | A list that is used by a producer to indicate supported AI/ML emulation capabilities to a consumer, which may also be understood as AI/ML emulation capabilities that SON use cases can support, or optionally may be understood as universal AI/ML emulation capabilities that are supported. |

Table 2 shows relevant attributes of the SON.

For example, in S602, the domain management function unit may indicate, to the cross-domain management function unit based on the attribute of 'supported AI/ML inference capabilities (supportedAIMLInferenceCapabilityList)', AI/ML inference capabilities supported by the SON. For example, the domain management function unit may indicate, to the cross-domain management function unit based on the attribute of 'supported AI/ML emulation capabilities (supportedAIMLEmulationCapabilityList)', AI/ML emulation capabilities supported by the SON.

Similarly, for relevant attributes of the MDA function and the AnLF function (AnLFFunction), refer to the implementation in Table 2. Details are not described in this application.

According to Table 2, the domain management function unit may indicate AI/ML capability information of one or more inference types to the cross-domain management function unit.

**Table 3: Example of relevant attributes of an AI/ML inference function (AiMlInferenceCapability <<IOC>>)**

| Attribute (Attribute name) | Definition (Definition) |
|---|---|
| Activation status activationStatus | Refer to 3GPP TS 28.104, and details are not described herein. |
| Supported AI/ML inference capabilities (supportedMLInferenceCapabilityList) | A list that is used by a producer to indicate supported AI/ML inference capabilities to a consumer. |
| Supported AI/ML emulation capabilities (supportedMLEmulationCapabilityList) | A list that is used by a producer to indicate supported AI/ML emulation capabilities to a consumer. |

Table 3 shows the relevant attributes of the AI/ML inference function (AiMlInferenceCapability).

For example, in S602, the domain management function unit may indicate, to the cross-domain management function unit based on the attribute of 'supported AI/ML inference capabilities (supportedMLInferenceCapabilityList)', AI/ML inference capabilities supported by the domain management function unit. For example, the domain management function unit may indicate, to the cross-domain management function unit based on the attribute of 'supported AI/ML emulation capabilities (supportedMLEmulationCapabilityList)', AI/ML emulation capabilities supported by the domain management function unit.

According to Table 3, the domain management function unit may indicate all AI/ML capability information of the domain management function unit to the cross-domain management function unit.

**Table 4: Example of relevant attributes of an AI/ML inference function of MO (AiMlMOCapability <<IOC>>)**

| Attribute (Attribute name) | Definition (Definition) |
|---|---|
| Supported AI/ML inference capabilities (supportedMLinferenceCapabilityList) | A list that is used by a producer to indicate supported AI/ML inference capabilities to a consumer, which may also be understood as AI/ML inference capabilities that MO use cases can support, or optionally may be understood as universal AI/ML inference capabilities that are supported. |
| Supported AI/ML emulation capabilities (supportedMLEmulationCapabilityList) | A list that is used by a producer to indicate supported AI/ML emulation capabilities to a consumer, which may also be understood as AI/ML emulation capabilities that MO use cases can support, or optionally may be understood as universal AI/ML emulation capabilities that are supported. |

Table 4 shows the relevant attributes of the MO function.

For example, in S602, the domain management function unit may indicate, to the cross-domain management function unit based on the attribute of 'AI/ML inference capabilities supported by MO (supportedAMLInferenceCapabilityList)', AI/ML inference capabilities supported by the MO. For example, the domain management function unit may indicate, to the cross-domain management function unit based on the attribute of 'AI/ML emulation capabilities supported by the MO (supportedMLEmulationCapabilityList)', AI/ML emulation capabilities supported by the MO.

According to Table 4, the domain management function unit may indicate AI/ML capability information of one or more inference types of the domain management function unit to the cross-domain management function unit.

The supported AI/ML inference capabilities (supportedMLInferenceCapabilityList) shown in Table 1 to Table 4 may be indicated by using relevant attributes in Table 5.

**Table 5: Example of relevant attributes of supported AI/ML inference capabilities (SupportedMLCapabilityList <<data type>>)**

| Attribute (Attribute name) | Definition (Definition) |
|---|---|
| AI/ML capability type (mLCapabilityType) | This attribute indicates an AI/ML capability type. It may be understood that this attribute indicates a type of an AI/ML inference capability supported by an ML model. |
| AI/ML inference type (applicableFunction) | This attribute indicates an applicable AI/ML inference type or inference function. It may be understood that this attribute indicates an object identifier (DN) of the AI/ML inference type or inference function, for example, MDA or NES. This attribute is optional. |

Table 5 shows the relevant attributes of the supported AI/ML inference capabilities. In other words, the supported AI/ML inference capabilities shown in Table 1 to Table 4 may be indicated by using the AI/ML capability type and the AI/ML inference type in Table 5.

Similarly, the supported AI/ML simulation capabilities (supportedMLEmulationCapabilityList) shown in Table 1 to Table 4 may be indicated by using related attributes shown in Table 6.

**Table 6: Example of relevant attributes of supported AI/ML emulation capabilities (SupportedMLEmulationCapabilityList <<data type>>)**

| Attribute (Attribute name) | Definition (Definition) |
|---|---|
| AI/ML capability type (mLEmulationCapabilityType) | This attribute indicates an AI/ML emulation capability type. It may be understood that this attribute indicates a type of an AI/ML emulation capability supported by an ML model. |
| AI/ML inference type (applicableFunction) | This attribute indicates an applicable AI/ML inference type or inference function. It may be understood that this attribute indicates an object identifier (DN) of the AI/ML inference type or inference function, for example, MDA or NES. This attribute is optional. |

Table 6 shows the relevant attributes of the supported AI/ML emulation capabilities. In other words, the supported AI/ML emulation capabilities shown in Table 1 to Table 4 may be indicated by using the AI/ML capability type and the AI/ML inference type in Table 5.

Based on the solution shown in FIG. 6, the cross-domain management function unit may obtain the AI/ML capability information of the domain management function unit, thereby enabling management and control of the AI/ML capability of the domain management function unit. In a possible case, the cross-domain management function unit may obtain AI/ML capability information of one or more inference types, to manage and control AI/ML capabilities of the one or more inference types.

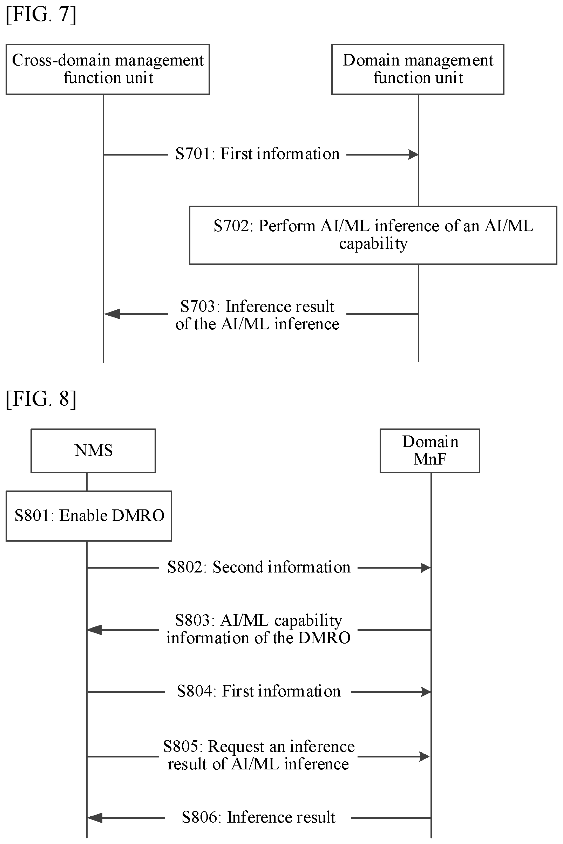

With reference to FIG. 7, the following describes a method for managing and controlling an AI/ML capability by the cross-domain management function unit according to an embodiment of this application. FIG. 7 is an example flowchart of a method for managing and controlling a machine model inference capability according to an embodiment of this application. The following operations may be included.

S701: A cross-domain management function unit sends first information to a domain management function unit.

Correspondingly, the domain management function unit receives the first information from the cross-domain management function unit.

Optionally, the cross-domain management function unit may send the first information to the domain management function unit based on the AI/ML capability information of the domain management function unit in S602.

The first information may indicate an AI/ML capability corresponding to AI/ML inference. In some embodiments, the AI/ML capability corresponding to the AI/ML inference may be understood as an AI/ML capability type corresponding to the AI/ML inference. In other words, the first information may indicate the AI/ML capability type corresponding to the AI/ML inference. The domain management function unit may perform the AI/ML inference corresponding to the AI/ML capability type, to obtain an inference result of the AI/ML capability. In a possible case, the first information may be carried in an inference request or an emulation request, or carried in an existing SON function object class, an existing MDArequest object class, an existing NWDAF information object class, an existing AIML inference function object class, or a newly defined object class. This is not limited in this application.

In some embodiments, the first information indicates an AI/ML capability, and the AI/ML capability may include one or more of the following: a traffic analysis capability, a coverage analysis capability, a mobility analysis capability, a load analysis capability, a fault analysis capability, a network slice throughput analysis capability, a slice load analysis capability, a network slice traffic prediction analysis capability, a service experience analysis capability, a congestion analysis capability, an energy efficiency analysis capability, or an energy consumption analysis capability.

Optionally, in the embodiment shown in FIG. 7, the cross-domain management function unit may further send an AI/ML inference type of the AI/ML capability to the domain management function unit. It may be understood that the AI/ML inference type and the AI/ML capability may be indicated in a same message, or may be indicated in different messages. This is not specifically limited in this application. For example, the first information may include the AI/ML capability and the AI/ML inference type. In some embodiments, the AI/ML inference type may include at least one of the following: an MDA inference type, a SON inference type, an NWDAF inference type, or a radio access network intelligence (RAN intelligence) inference type. For specific definitions of the AI/ML inference types, refer to inference types (InferenceType) defined in clause 7.5.1 in 3GPP TS 28.105 V18.2.0. Details are not described in this application.

In some embodiments, the first information includes the AI/ML inference type and an AI/ML capability available for the AI/ML inference type. In this case, the domain management function unit may perform a function corresponding to the AI/ML inference type, and may perform AI/ML inference by using the available AI/ML capability, to obtain an inference result. It may be understood that the inference result may be used to perform the function corresponding to the AI/ML inference type.

In an example, an indication of the AI/ML capability shown in FIG. 7 may be implemented by using an existing IOC, for example, including a DMRO function (DMROFunction), a DLBO function (DLBOFunction), a DES function (DESManagementFunction), an AI/ML inference capability (AiMlInferenceCapability), an AI/ML capability of ES (AiMlESCapability), an AI/ML capability of MO (AiMlMOCapability), an AI/ML capability of LB (AiMlLBCapability), an MDA function (MDAFunction), an MDS request (MDARequest), an AnLF function (AnLFFunction), or the like, or may be implemented by using a newly defined object class. This is not limited in this application. For example, the following separately describes attributes of the foregoing several object classes.

**Table 7: Example of attributes of a DMRO function (DMROFunction <<IOC>>)**

| Attribute (Attribute name) | Definition (Definition) |
|---|---|
| DMRO control (dmroControl) | Refer to 3GPP TS 28.541, and details are not described herein. |
| maximumDeviationHoTriggerLow | Refer to 3GPP TS 28.541, and details are not described herein. |
| maximumDeviationHoTriggerHigh | Refer to 3GPP TS 28.541, and details are not described herein. |
| minimumTimeBetweenHoTriggerChange | |
| tstoreUEcntxt | Refer to 3GPP TS 28.541, and details are not described herein. |
| Available AI/ML inference capabilities (availableMLinferenceCapabilityList) | A list that is used by a consumer to indicate available AI/ML inference capabilities to a producer, which may also be understood as AI/ML inference capabilities that are available for MRO use cases, or optionally may be understood as universal AI/ML inference capabilities that are available. |
| Available AI/ML emulation capabilities (availableMLEmulationCapabilityList) | A list that is used by a consumer to indicate available AI/ML emulation capabilities to a producer, which may also be understood as AI/ML emulation capabilities that are available for MRO use cases, or optionally may be understood as universal AI/ML emulation capabilities that are available. |

Table 7 shows relevant attributes of the DMRO function.

For example, in S701, the cross-domain management function unit may send an AI/ML capability of DMRO to the domain management function unit based on the attributes shown in Table 7. For example, the first information may carry the attribute of 'available AI/ML inference capabilities (availableMLinferenceCapabilityList)', to send an AI/ML inference capability of the DMRO to the domain management function unit, so as to indicate the domain management function unit to perform AI/ML inference of the AI/ML inference capability of the DMRO. For example, the first information may carry the attribute of 'available AI/ML simulation capabilities (availableMLEmulationCapabilityList)', to send an AI/ML emulation capability of the DMRO to the domain management function unit, so as to indicate the domain management function unit to perform AI/ML inference emulation of the AI/ML emulation capability of the DMRO.

Similarly, for relevant attributes of the DLBO function (DLBOFunction) and the DES function (DESManagementFunction), refer to the implementation in Table 7. Details are not described in this application.

According to Table 7, the cross-domain management function unit may indicate AI/ML capabilities of one or more inference types to the domain management function unit, to indicate the domain management function unit to perform AI/ML inference of the AI/ML capabilities of the one or more inference types.

It should be noted that Table 1 and Table 7 may be implemented as one table, or may be implemented as different tables. This is not specifically limited in this application.

**Table 8: Example of attributes indicated by AI/ML capabilities of a SON function (SONFunction <<IOC>>)**

| Attribute (Attribute name) | Definition (Definition) |
|---|---|
| Available AI/ML inference capabilities (availableMLInferenceCapabilityList) | A list that is used by a consumer to indicate available AI/ML inference capabilities to a producer, which may also be understood as AI/ML inference capabilities that are available for SON use cases, or optionally may be understood as universal AI/ML inference capabilities that are available. |
| Available AI/ML emulation | A list that is used by a consumer to indicate available |
| capabilities (availableMLEmulationCapabilityList) | AI/ML emulation capabilities to a producer, which may also be understood as AI/ML emulation capabilities that are available for SON use cases, or optionally may be understood as universal AI/ML emulation capabilities that are available. |

Table 8 shows relevant attributes of the SON.

For example, in S701, the cross-domain management function unit may indicate an AI/ML inference capability of the SON to the domain management function unit by using the attribute of 'available AI/ML inference capabilities (availableMLInferenceCapabilityList)', to indicate the domain management function unit to perform AI/ML inference of the AI/ML inference capability of the SON. For example, the cross-domain management function unit may indicate an AI/ML emulation capability of the SON to the domain management function unit by using the attribute of 'available AI/ML emulation capabilities (availableMLEmulationCapabilityList)', to indicate the domain management function unit to perform AI/ML inference emulation of the AI/ML emulation capability of the SON.

Similarly, for relevant attributes of the MDA function and the AnLF function (AnLFFunction), refer to the implementation in Table 8. Details are not described in this application.

According to Table 8, the cross-domain management function unit may indicate AI/ML capabilities of one or more inference types to the domain management function unit, to indicate the domain management function unit to perform AI/ML inference of the AI/ML capabilities of the one or more inference types. It should be noted that Table 2 and Table 8 may be implemented as one table, or may be implemented as different tables. This is not specifically limited in this application.

**Table 9: Example of relevant attributes of an AI/ML inference function (AiMlInferenceCapability <<IOC>>)**

| Attribute (Attribute name) | Definition (Definition) |
|---|---|
| Activation status activationStatus | Refer to 3GPP TS 28.104, and details are not described herein. |
| Available AI/ML inference capabilities (availableMLInferenceCapabilityList) | This attribute is used by a consumer to indicate ML inference capabilities that can be used by a producer to perform an AI/ML inference type (for example, SON/RAN intelligence/MDA/NWDAF), and may be a list. |
| Available AI/ML emulation capabilities (availableMLEmulationCapabilityList) | This attribute is used by a consumer to indicate ML emulation capabilities that can be used by a producer to perform an AI/ML inference type (for example, SON/RAN intelligence/MDA/NWDAF), and may be a list. |

Table 9 shows the relevant attributes of an AI/ML inference capability (AiMlInferenceCapability).

For example, in S701, the cross-domain management function unit may indicate an AI/ML inference capability to the domain management function unit by using the attribute of 'available AI/ML inference capabilities (availableMLInferenceCapabilityList)', to indicate the domain management function unit to perform AI/ML inference of the AI/ML inference capability. For example, the cross-domain management function unit may indicate an AI/ML emulation capability to the domain management function unit by using the attribute of 'available AI/ML emulation capabilities (availableMLEmulationCapabilityList)', to indicate the domain management function unit to perform AI/ML inference emulation of the AI/ML emulation capability. In other words, the cross-domain management function unit may indicate, by using the two attributes, the domain management function unit to perform AI/ML inference of an AI/ML capability, and is not limited to AI/ML inference of an AI/ML capability of a specific inference type.

According to Table 9, the cross-domain management function unit may indicate an AI/ML capability to the domain management function unit, to indicate the domain management function unit to perform AI/ML inference of the AI/ML capability. In a possible case, according to Table 9, the cross-domain management function unit may further indicate AI/ML capabilities of one or more inference types to the domain management function unit, to indicate the domain management function unit to perform AI/ML inference of the AI/ML capabilities of the one or more inference types.

It should be noted that Table 3 and Table 9 may be implemented as one table, or may be implemented as different tables. This is not specifically limited in this application.

**Table 10: Example of relevant attributes of AI/ML capabilities of an MO function (AiMlMOCapability <<IOC>>)**

| Attribute (Attribute name) | Definition (Definition) |
|---|---|
| Available AI/ML inference capabilities (availableMLInferenceCapabilityList) | This attribute is used by a consumer to indicate ML inference capabilities that can be used by a producer to perform an MO inference type, and may be a list. |
| Available AI/ML emulation capabilities (availableMLEmulationCapabilityList) | This attribute is used by a consumer to indicate ML emulation capabilities that can be used by a producer to perform an MO function, and may be a list. |

Table 10 shows the relevant attributes of the MO function.

For example, in S701, the cross-domain management function unit may indicate an AI/ML inference capability of the MO to the domain management function unit by using the attribute of 'AI/ML inference capabilities available for MO (availableMLInferenceCapabilityList)', to indicate the domain management function unit to perform AI/ML inference of the AI/ML inference capability of the MO. For example, the cross-domain management function unit may indicate an AI/ML emulation capability to the domain management function unit by using the attribute of 'AI/ML emulation capabilities available for the MO (availableMLEmulationCapabilityList)', to indicate the domain management function unit to perform AI/ML inference emulation of the AI/ML emulation capability of the MO.

According to Table 10, the cross-domain management function unit may indicate AI/ML capabilities of one or more inference types to the domain management function unit, to indicate the domain management function unit to perform AI/ML inference of the AI/ML capabilities of the one or more inference types. It should be noted that Table 4 and Table 10 may be implemented as one table, or may be implemented as different tables. This is not specifically limited in this application.

The available AI/ML inference capabilities (availableMLinferenceCapabilityList) shown in Table 7 to Table 10 may be indicated by using relevant attributes in Table 11.

**Table 11: Example of relevant attributes of available AI/ML inference capabilities (availableMLinferenceCapabilityList <<data type>>)**

| Attribute (Attribute name) | Definition (Definition) |
|---|---|
| AI/ML capability type (mLCapabilityType) | This attribute indicates an available AI/ML capability type. It may be understood that this attribute indicates a type of an AI/ML capability supported by an ML model. |
| AI/ML inference type (applicableFunction) | This attribute indicates an applicable AI/ML inference type or inference function. It may be understood that this attribute indicates an object identifier (DN) of the AI/ML inference type or inference function, for example, MDA or NES. This attribute is optional. |

Table 11 shows the relevant attributes of the available AI/ML inference capabilities. In other words, the available AI/ML inference capabilities shown in Table 7 to Table 10 may be indicated by using the AI/ML capability type and the AI/ML inference type in Table 5.

Similarly, the available AI/ML emulation capabilities (availableMLEmulationCapabilityList) shown in Table 7 to Table 10 may be indicated by using relevant attributes shown in Table 12.

**Table 12: Example of relevant attributes of available AI/ML emulation capabilities (availableMLEmulationCapabilityList <<data type>>)**

| Attribute (Attribute name) | Definition (Definition) |
|---|---|
| AI/ML capability type (mLEmulationCapabilityType) | This attribute indicates an available AI/ML emulation capability type. It may be understood that this attribute indicates a type of an AI/ML capability supported by an ML model. |
| AI/ML inference type (applicableFunction) | This attribute indicates an applicable AI/ML inference type or inference function. It may be understood that this attribute indicates an object identifier (DN) of the AI/ML inference type or inference function, for example, MDA or NES. This attribute is optional. |

Table 12 shows the relevant attributes of the available AI/ML emulation capabilities. In other words, the available AI/ML emulation capabilities shown in Table 7 to Table 10 may be indicated by using the AI/ML capability type and the AI/ML inference type in Table 12.

It may be understood that the AI/ML capability described in S701 may be universal, or may be at a granularity of a use case. For details, refer to the foregoing related descriptions. The details are not described herein again.

S702: The domain management function unit performs the AI/ML inference of the AI/ML capability.

In S702, the domain management function unit performs the AI/ML inference of the AI/ML capability, to obtain the inference result of the AI/ML capability. It may be understood that, that the domain management function unit performs the AI/ML inference of the AI/ML capability may be understood as that the domain management function unit performs AI/ML inference of the AI/ML capability type, to obtain an inference result of the AI/ML capability type. For example, the first information may indicate one or more of the following: the traffic analysis capability, the coverage analysis capability, the mobility analysis capability, the load analysis capability, the fault analysis capability, the network slice throughput analysis capability, the slice load analysis capability, the network slice traffic prediction analysis capability, the service experience analysis capability, the energy efficiency analysis capability, or the energy consumption analysis capability. In this case, the domain management function unit may perform AI/ML inference of one or more of the following: the traffic analysis capability, the coverage analysis capability, the mobility analysis capability, the load analysis capability, the fault analysis capability, the network slice throughput analysis capability, the slice load analysis capability, the network slice traffic prediction analysis capability, the service experience analysis capability, the energy efficiency analysis capability, or the energy consumption analysis capability that may be indicated by the first information.

Optionally, in S701, the cross-domain management function unit may further send, to the domain management function unit, the AI/ML inference type corresponding to the AI/ML capability. For example, the first information includes the AI/ML capability and the AI/ML inference type, and in this case, the domain management function unit may perform the AI/ML capability of the AI/ML inference type. The AI/ML inference type includes at least one of the following: the MDA inference type, the SON inference type, the NWDAF inference type, or the radio access network intelligence (RAN intelligence) inference type.

For example, the first information indicates the load analysis capability, and the cross-domain management function unit sends, to the domain management function unit, an AI/ML inference type corresponding to the load analysis capability. For example, if the AI/ML inference type is ES (NES), the domain management function unit may perform AI/ML inference of the load analysis capability of the ES (NES).

In some embodiments, the cross-domain management function unit may trigger enabling of a function corresponding to the AI/ML inference type. For example, the cross-domain management function unit may trigger the domain management function unit to enable or perform a function corresponding to at least one of the MDA inference type, the SON inference type, the NWDAF inference type, or the radio access network intelligence (RAN intelligence) inference type.

It should be noted that the step that the cross-domain management function unit triggers enabling of the function corresponding to the AI/ML inference type may be performed before S701, may be performed after S701 and before S702, or may be performed together with S701. This is not specifically limited in this application. In this case, in S702, the domain management function unit may enable the function corresponding to the AI/ML inference type, and perform the AI/ML inference of the AI/ML capability indicated by the first information, to obtain the inference result.

S703: The domain management function unit sends the inference result of the AI/ML inference to the cross-domain management function unit.

Correspondingly, the cross-domain management function unit receives the inference result from the domain management function unit. For example, the cross-domain management function unit may receive the inference result from the domain management function unit.

In a possible case, the inference result may be carried in an inference report. For example, the domain management function unit may send an inference report of the AI/ML inference to the cross-domain management function unit, where the inference report may carry the inference result.

Optionally, the domain management function unit may further send one or both of an inference status (for example, one of success, in progress, or failure) or inference time (for example, one or more of start time, end time, or duration) to the cross-domain management function unit. It may be understood that one or both of the inference status or the inference time and the inference result may be carried in a same message for sending, for example, carried in the inference report for sending. Alternatively, one or both of the inference status or the inference time and the inference result may be carried in different messages for sending. This is not specifically limited in this application.

In this embodiment of this application, the inference result may be an inference result of the AI/ML capability indicated by the first information.

For example, if the first information indicates an AI/ML capability of MRO (MO), the inference result may include one or more of the following: a cell identifier, a base station identifier, a cell individual offset (cell individual offset, CIO), a time trigger, or a handover trigger.

For example, if the first information indicates an AI/ML capability of MLB (LB), the inference result may include one or more of the following: a cell identifier, a base station identifier, or a CIO.

For example, if the first information indicates an AI/ML capability of ES (NES), the inference result may include one or more of the following: a cell identifier, a base station identifier, cell deactivation information, carrier deactivation information, or slot deactivation information.

For an inference result of the MDA inference type, refer to one or more of corresponding outputs (outputs) in clause 8.4 in TS 28.104. Details are not described in this application.

In an example, the domain management function unit may further send, to the cross-domain management function unit, an AI/ML inference type to which the inference result is applicable. The AI/ML inference type includes at least one of the following: an MDA inference type, a SON inference type, an NWDAF inference type, or a radio access network intelligence (RAN intelligence) inference type. It may be understood that the AI/ML inference type may be understood as an inference type of the AI/ML capability to which the inference result is applicable. It should be noted that the AI/ML inference type and the inference result may be carried in a same message, for example, in the inference report, or the AI/ML inference type and the inference result may be carried in different messages. This is not specifically limited in this application.

Optionally, before S703, the cross-domain management function unit may send an inference result request to the domain management function unit, to request or indicate the domain management function unit to send the inference result or the inference report.

The following describes, with reference to a specific use case, a method for managing and controlling a machine model inference capability according to an embodiment of this application.

For example, a mobility optimization capability use case is used as an example, and the AI/ML capability may be attached to MRO or distributed MRO. FIG. 8 is an example flowchart of a method for managing and controlling a machine model inference capability according to an embodiment of this application. The following operations may be included. In the embodiment shown in FIG. 8, an example in which a cross-domain management function unit is an NMS network management system (network management system, NMS) and a domain management function unit is a domain MnF is used for description.

S801: The NMS enables DMRO.

In S801, the NMS may trigger enabling of the DMRO. In other words, the NMS may trigger enabling of a DMRO function.

It may be understood that the NMS may send, to the domain MnF, an indication for triggering enabling of the DMRO, and the domain MnF may indicate a base station to enable the DMRO.

S802: The NMS sends second information to the domain MnF.

Correspondingly, the domain MnF receives the second information from the NMS. This step is optional.

For the second information, refer to the implementation in S601. In a possible case, the second information may be used to request AI/ML capability information of the DMRO of the domain MnF. For example, the second information may be an AI/ML inference capability request for the DMRO.

S803: The domain MnF sends the AI/ML capability information of the DMRO to the NMS.

Correspondingly, the NMS receives the AI/ML capability information of the DMRO from the domain MnF.

In S803, the domain MnF may send the AI/ML capability information of the DMRO to the NMS in response to the second information.

In a possible case, when the AI/ML capability is universal, the domain MnF may directly send a capability indication, for example, the DMRO supporting an AIML inference capability or the DMRO supporting an AIML inference emulation capability. For example, the domain MnF may send a mobility analysis capability, a traffic analysis capability, a coverage analysis capability, or the like supported by the DMRO.

In another possible case, when the AI/ML capability is at a granularity of a use case, the domain MnF may send, to the NMS, an AI/ML capability of the DMRO, for example, a coverage analysis capability, a traffic analysis capability, or a mobility performance analysis capability.

S804: The NMS sends first information to the domain MnF.

Correspondingly, the domain MnF receives the first information from the NMS. For the first information, refer to the implementation in S601.

In S804, the NMS may select, based on the AI/ML capability information of the DMRO, an AI/ML capability to activate for performing AI/ML inference of the DMRO, and indicate the selected AI/ML capability to the domain MnF by using the first information.

In a possible case, if the AI/ML capability is deployed in the base station, the domain MnF may send the first information to the base station, to indicate the base station to perform AI/ML inference of the AI/ML capability.

S805: The NMS requests an inference result of the AI/ML inference from the domain MnF.

For example, the NMS may send an inference result request to the domain MnF, to request the domain MnF to send the inference result of the AI/ML inference.

S806: The domain MnF sends the inference result to the NMS.

Correspondingly, the NMS receives the inference result from the domain MnF.

In S806, the domain MnF may send the inference result to the NMS in response to the inference result request in S805, for example, one or more of a coverage analysis result, a traffic analysis result, or a mobility analysis result. In a possible case, if the AI/ML capability is deployed in the base station, the domain MnF may obtain the inference result from the base station, and send the inference result to the NMS.

For example, the domain MnF sends an inference report to the NMS, where the inference report may include inference time, an inference status, and the inference result. Optionally, the inference report further includes an inference type of the inference result, that is, the DMRO.

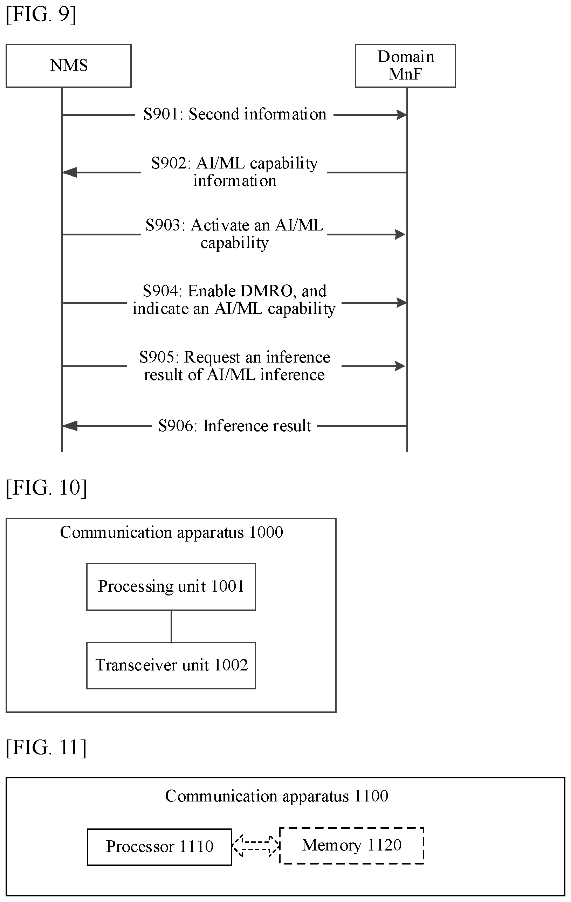

In the embodiment shown in FIG. 8, the NMS may first enable the DMRO and then activate the AI/ML inference. The following describes, with reference to FIG. 9, a scenario in which the NMS first activates AI/ML inference and then enables the DMRO. FIG. 9 is an example flowchart of a method for managing and controlling a machine model inference capability according to an embodiment of this application. The following operations may be included. In the embodiment shown in FIG. 9, an example in which a cross-domain management function unit is an NMS and a domain management function unit is a domain MnF is used for description.

S901: The NMS sends second information to the domain MnF.

Correspondingly, the domain MnF receives the second information from the NMS. For the second information, refer to the implementation in S601.

For example, the second information may be used to request AI/ML capability information of the domain MnF. It may be understood that a difference between the second information in S901 and the second information in S801 lies in that the second information in S901 may be used to request the AI/ML capability information of the domain MnF, and is not limited to the AI/ML capability information of the DMRO.

This step is optional.

S902: The domain MnF sends the AI/ML capability information to the NMS.

Correspondingly, the NMS receives the AI/ML capability information from the domain MnF.

For S902, refer to the implementation in S602. In S902, the domain MnF may send, to the NMS, information about a supported or possessed AI/ML capability.

S903: The NMS activates the AI/ML capability to perform AI/ML inference.

For example, the NMS may send an inference request to the domain MnF to perform the AI/ML inference.

For S903, refer to the implementation in S601. In S903, the NMS may activate an AI/ML capability of the DMRO based on the AI/ML capability information obtained in S902, to perform the AI/ML inference of the AI/ML capability.

In a possible case, if an AI/ML inference capability is deployed in a base station, the domain MnF may send first information to the base station, to indicate the base station to perform the AI/ML inference of the AI/ML capability.

S904: The NMS enables the DMRO, and indicates an AI/ML capability.

In S904, the NMS may indicate, to the domain MnF based on the obtained AI/ML capability information, an AI/ML capability to be used of the DMRO. In other words, in S904, the NMS may indicate, to the domain MnF, the AI/ML capability to be used of the DMRO.

For S905 and S906, refer to S805 and S806.

Based on the concepts of the foregoing embodiments, with reference to FIG. 10, an embodiment of this application provides a communication apparatus 1000. The apparatus 1000 includes a processing unit 1001 and a transceiver unit 1002. The apparatus 1000 may be a communication apparatus, or may be an apparatus that is used in a communication apparatus and that can support the communication apparatus in performing a method for notifying a quality of service parameter.

The transceiver unit may also be referred to as a transceiver module, a transceiver, a transceiver machine, a transceiver apparatus, or the like. The processing unit may also be referred to as a processor, a processing board, a processing unit, a processing apparatus, or the like. Optionally, a component that is in the transceiver unit and that is configured to implement a receiving function may be considered as a receiving unit. It should be understood that the transceiver unit is configured to perform a sending operation and a receiving operation of the communication apparatus in the foregoing method embodiments. A component that is in the transceiver unit and that is configured to implement a sending function is considered as a sending unit. That is, the transceiver unit includes the receiving unit and the sending unit.

In addition, it should be noted that, if the apparatus is implemented by using a chip or a chip circuit, the transceiver unit may be an input/output circuit and/or a communication interface, and perform an input operation (corresponding to the foregoing receiving operation) and an output operation (corresponding to the foregoing sending operation). The processing unit is an integrated processor or microprocessor, or an integrated circuit.

The following describes in detail implementations in which the apparatus 1000 is used in the first communication apparatus and the second communication apparatus.

For example, when the apparatus 1000 is used in the first communication apparatus, operations performed by the units of the apparatus are described in detail.

In an optional implementation, the communication apparatus 1000 may be used in the first communication apparatus, to perform the method performed by the first communication apparatus, specifically, for example, the method performed by the terminal device in the foregoing embodiments shown in FIG. 6 to FIG. 9.

For example, the transceiver unit 1002 is configured to receive first information from the second communication apparatus, where the first information includes an AI/ML capability corresponding to AI/ML inference. The processing unit 1001 is configured to perform the AI/ML inference of the AI/ML capability, to obtain an inference result. The transceiver unit 1002 is further configured to send the inference result to the second communication apparatus.

For another example, the processing unit 1001 is configured to determine supported AI/ML capability information. The transceiver unit 1002 is configured to send the supported AI/ML capability information to the second communication apparatus. The AI/ML capability information indicates one or more AI/ML capabilities. The AI/ML capability information is used to manage and control the one or more AI/ML capabilities.

For example, when the apparatus 1000 is used in the second communication apparatus, operations performed by the units of the apparatus are described in detail.

In an optional implementation, the communication apparatus 1000 may be used in the second communication apparatus, to perform the method performed by the second communication apparatus, specifically, for example, the method performed by the second communication apparatus in the foregoing embodiments shown in FIG. 6 to FIG. 9.

For example, the processing unit 1001 is configured to generate first information, where the first information includes an AI/ML capability corresponding to AI/ML inference. The transceiver unit 1002 is configured to send the first information to the first communication apparatus. The transceiver unit 1002 is further configured to receive, from the first communication apparatus, an inference result of the AI/ML inference.

For another example, the transceiver unit 1002 is configured to receive supported AI/ML capability information from the first communication apparatus. The AI/ML capability information indicates one or more AI/ML capabilities. The AI/ML capability information is used to manage and control the one or more AI/ML capabilities. The processing unit 1001 is configured to manage and control the one or more AI/ML capabilities.

Based on the concepts of the foregoing embodiments, as shown in FIG. 11, an embodiment of this application provides a communication apparatus 1100. The communication apparatus 1100 includes a processor 1110. Optionally, the communication apparatus 1100 may further include a memory 1120, configured to store instructions executed by the processor 1110, input data required by the processor 1110 to run the instructions, or data generated by running the instructions by the processor 1110. The processor 1110 may implement the methods shown in the foregoing method embodiments by using the instructions stored in the memory 1120.

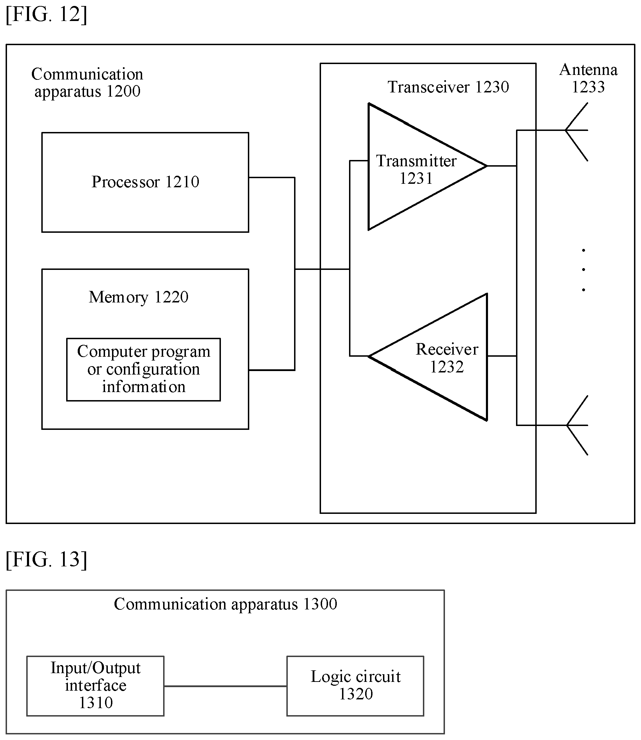

Based on the concepts of the foregoing embodiments, as shown in FIG. 12, an embodiment of this application provides a communication apparatus 1200. The communication apparatus 1200 may be a chip or a chip system. Optionally, in this embodiment of this application, the chip system may include a chip, or may include a chip and another discrete device.

The communication apparatus 1200 may include at least one processor 1210. The processor 1210 is coupled to a memory. Optionally, the memory may be located inside the apparatus, or may be located outside the apparatus. For example, the communication apparatus 1200 may further include at least one memory 1220. The memory 1220 stores a necessary computer program, configuration information, a computer program or instructions, and/or data for implementing any one of the foregoing embodiments. The processor 1210 may execute the computer program stored in the memory 1220, to complete the method in any one of the foregoing embodiments. Optionally, the memory may alternatively be integrated with the processor.

The coupling in this embodiment of this application may be an indirect coupling or a communication connection between apparatuses, units, or modules in an electrical form, a mechanical form, or another form, and is used for information exchange between the apparatuses, the units, or the modules. The processor 1210 may perform a cooperative operation with the memory 1220. A specific connection medium between a transceiver 1230, the processor 1210, and the memory 1220 is not limited in this embodiment of this application.

The communication apparatus 1200 may further include the transceiver 1230, and the communication apparatus 1200 may exchange information with another device via the transceiver 1230. The transceiver 1230 may be a circuit, a bus, a transceiver, or any other apparatus that may be configured to exchange information, or is referred to as a signal transceiver unit. As shown in FIG. 12, the transceiver 1230 includes a transmitter 1231, a receiver 1232, and an antenna 1233. In addition, when the communication apparatus 1200 is a chip-type apparatus or a circuit, the transceiver in the communication apparatus 1200 may alternatively be an input/output circuit and/or a communication interface, and may input data (or referred to as receive data) and output data (or referred to as send data). The processor is an integrated processor or microprocessor, or an integrated circuit, and the processor may determine output data based on input data.

In a possible implementation, the communication apparatus 1200 may be used in a communication apparatus. Specifically, the communication apparatus 1200 may be a communication apparatus, or may be an apparatus that can support a communication apparatus in implementing a function of the first communication apparatus or the second communication apparatus in any one of the foregoing embodiments. The memory 1220 stores a computer program, a computer program or instructions, and/or data necessary for implementing the function of the first communication apparatus or the second communication apparatus in any one of the foregoing embodiments. The processor 1210 may execute the computer program stored in the memory 1220, to complete the method performed by the first communication apparatus or the second communication apparatus in any one of the foregoing embodiments.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of instructions or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Based on the foregoing embodiments, refer to FIG. 13. An embodiment of this application further provides another communication apparatus 1300, including an input/output interface 1310 and a logic circuit 1320. The input/output interface 1310 is configured to receive code instructions and transmit the code instructions to the logic circuit 1320. The logic circuit 1320 is configured to run the code instructions to perform the method performed by the first communication apparatus or the second communication apparatus in any one of the foregoing embodiments.

The following describes in detail operations performed when the apparatus 1300 is used in the first communication apparatus or the second communication apparatus.

In an optional implementation, the communication apparatus 1300 may be used in the first communication apparatus, to perform the method performed by the first communication apparatus, specifically, for example, the method performed by the first communication apparatus in the foregoing embodiments shown in FIG. 6 to FIG. 9.

For example, the input/output interface 1310 is configured to input first information from the second communication apparatus, where the first information includes an AI/ML capability corresponding to AI/ML inference. The logic circuit 1320 is configured to perform the AI/ML inference of the AI/ML capability, to obtain an inference result. The input/output interface 1310 is further configured to output the inference result.

For another example, the logic circuit 1320 is configured to determine supported AI/ML capability information. The input/output interface 1310 is configured to output the supported AI/ML capability information. The AI/ML capability information indicates one or more AI/ML capabilities. The AI/ML capability information is used to manage and control the one or more AI/ML capabilities.

The communication apparatus 1300 provided in this embodiment may be used in the first communication apparatus to perform the method performed by the first communication apparatus. Therefore, for technical effects that can be achieved, refer to the foregoing method embodiments. Details are not described herein again.

In an optional implementation, the communication apparatus 2000 may be used in the second communication apparatus, to perform the method performed by the second communication apparatus, specifically, for example, the method performed by the second communication apparatus in the foregoing embodiments shown in FIG. 6 to FIG. 9.

For example, the logic circuit 1320 is configured to generate first information, where the first information includes an AI/ML capability corresponding to AI/ML inference. The input/output interface 1310 is configured to output the first information. The input/output interface 1310 is further configured to input, from the first communication apparatus, an inference result of the AI/ML inference.

For another example, the input/output interface 1310 is configured to input AI/ML capability information supported by the first communication apparatus. The AI/ML capability information indicates one or more AI/ML capabilities. The AI/ML capability information is used to manage and control the one or more AI/ML capabilities. The logic circuit 1320 is configured to manage and control the one or more AI/ML capabilities.

The communication apparatus 1300 provided in this embodiment may be used in the second communication apparatus to perform the method performed by the second communication apparatus. Therefore, for technical effects that can be achieved, refer to the foregoing method embodiments. Details are not described herein again.

Based on the foregoing embodiments, an embodiment of this application further provides a communication system. The system includes at least one first core network and at least one second core network. Optionally, the communication system further includes at least one terminal device. For technical effects that can be achieved, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the communication apparatus in any one of the foregoing embodiments is implemented. The computer-readable storage medium may include any medium that can store program code, such as a USB flash drive, a removable hard disk, a read-only memory, a random access memory, a magnetic disk, or an optical disc.

To implement functions of the communication apparatuses in FIG. 9 to FIG. 13, an embodiment of this application further provides a chip, including a processor, configured to support the communication apparatus in implementing a function of the first communication apparatus or the second communication apparatus in the foregoing method embodiments. In a possible design, the chip is connected to a memory, or the chip includes a memory. The memory is configured to store a computer program or instructions and data that are necessary for a terminal device or a network device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, or an optical memory) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or the instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program or the instructions may alternatively be stored in a computer-readable memory that can indicate a computer or another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program or the instructions may alternatively be loaded onto a computer or another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams. It is clear that a person skilled in the art may make various modifications and variations to embodiments of this application without departing from the scope of embodiments of this application. In this case, this application is also intended to cover these modifications and variations to embodiments of this application provided that the modifications and variations fall within the scope of the claims of this application and equivalent technologies thereof.

## Claims

1. A method for managing and controlling a machine model inference capability, comprising:
receiving AI/ML capability information supported by a first communication apparatus, wherein the AI/ML capability information indicates one or more AI/ML capabilities, wherein
the AI/ML capability information is used to manage and control the one or more AI/ML capabilities.

2. The method according to claim 1, further comprising:
receiving an AI/ML inference type to which the AI/ML capability information is applicable, wherein the inference type comprises one or more of the following: a management data analytics function, a mobility optimization function, a network energy saving function, or a load balancing function.

3. The method according to claim 1 or 2, further comprising:
sending second information to the first communication apparatus, wherein the second information is used to request the first communication apparatus to send the AI/ML capability information.

4. The method according to claim 3, wherein the second information indicates the first communication apparatus to send the AI/ML capability information supported by one or more of the following: the management data analytics function, the mobility optimization function, the network energy saving function, or the load balancing function.

5. The method according to any one of claims 1 to 4, wherein the one or more AI/ML capabilities comprise one or more of the following: a traffic analysis capability, a traffic prediction capability, a mobility analysis capability, a mobility prediction capability, a load analysis capability, a load prediction capability, an energy consumption analysis capability, or an energy consumption prediction capability.

6. The method according to any one of claims 1 to 5, further comprising:
sending first information to the first communication apparatus, wherein the first information comprises an AI/ML capability corresponding to AI/ML inference, and the one or more AI/ML capabilities comprise the AI/ML capability corresponding to the AI/ML inference; and
receiving, from the first communication apparatus, an inference result of the AI/ML inference.

7. The method according to claim 6, wherein the first information is used to request the first communication apparatus to perform the AI/ML inference of the AI/ML capability corresponding to the AI/ML inference.

8. The method according to claim 6 or 7, further comprising:
sending an inference type of the AI/ML capability, wherein the inference type comprises one or more of the following: the management data analytics function, the mobility optimization function, the network energy saving function, or the load balancing function.

9. The method according to any one of claims 6 to 8, further comprising:
receiving one or both of an inference status or inference time.

10. The method according to any one of claims 6 to 9, wherein the inference result further comprises an inference type of the inference result, and the inference type comprises one or more of the following: the management data analytics function, the mobility optimization function, the network energy saving function, or the load balancing function.

11. The method according to any one of claims 6 to 10, wherein the inference result comprises one or more of the following:
a cell individual offset, a cell identifier, a network device identifier, a time trigger, a handover trigger, cell deactivation information, carrier deactivation information, or slot deactivation information.

12. A method for managing and controlling a machine model inference capability, comprising:
sending supported AI/ML capability information to a second communication apparatus, wherein the AI/ML capability information indicates one or more AI/ML capabilities, wherein
the AI/ML capability information is used by the second communication apparatus to manage and control the one or more AI/ML capabilities.

13. The method according to claim 12, further comprising:
sending, to the second communication apparatus, an AI/ML inference type to which the AI/ML capability information is applicable, wherein the inference type comprises one or more of the following: a management data analytics function, a mobility optimization function, a network energy saving function, or a load balancing function.

14. The method according to claim 12 or 13, further comprising:
receiving second information from the second communication apparatus, wherein the second information is used to request the first communication apparatus to send the AI/ML capability information.

15. The method according to claim 14, wherein the second information indicates the first communication apparatus to send the AI/ML capability information supported by one or more of the following: the management data analytics function, the mobility optimization function, the network energy saving function, or the load balancing function.

16. The method according to any one of claims 12 to 15, wherein the one or more AI/ML capabilities comprise one or more of the following: a traffic analysis capability, a traffic prediction capability, a mobility analysis capability, a mobility prediction capability, a load analysis capability, a load prediction capability, an energy consumption analysis capability, or an energy consumption prediction capability.

17. The method according to any one of claims 12 to 16, further comprising:
receiving first information from the second communication apparatus, wherein the first information comprises an AI/ML capability corresponding to AI/ML inference, and the one or more AI/ML capabilities comprise the AI/ML capability corresponding to the AI/ML inference; and
sending an inference result of the AI/ML inference to the second communication apparatus.

18. The method according to claim 17, wherein the first information is used to request the first communication apparatus to perform the AI/ML inference of the AI/ML capability corresponding to the AI/ML inference.

19. The method according to claim 17 or 18, further comprising:
receiving an inference type of the AI/ML capability, wherein the inference type comprises one or more of the following: the management data analytics function, the mobility optimization function, the network energy saving function, or the load balancing function.

20. The method according to any one of claims 17 to 19, further comprising:
sending one or both of an inference status or inference time.

21. The method according to any one of claims 17 to 20, wherein the inference result further comprises an inference type of the inference result, and the inference type comprises one or more of the following: the management data analytics function, the mobility optimization function, the network energy saving function, or the load balancing function.

22. The method according to any one of claims 17 to 21, wherein the inference result comprises one or more of the following:
a cell individual offset, a cell identifier, a network device identifier, a time trigger, a handover trigger, cell deactivation information, carrier deactivation information, or slot deactivation information.

23. A communication apparatus, comprising a unit configured to perform the method according to any one of claims 1 to 11, or comprising a unit configured to perform the method according to any one of claims 12 to 22.

24. A computer-readable storage medium, wherein the computer-readable storage medium stores computer-executable instructions; and when the computer-executable instructions are invoked by an electronic apparatus, the electronic apparatus is caused to perform the method according to any one of claims 1 to 11, or the electronic apparatus is caused to perform the method according to any one of claims 12 to 22.

25. A communication system, comprising an apparatus configured to perform the method according to any one of claims 1 to 11 and an apparatus configured to perform the method according to any one of claims 12 to 22.

26. A chip system, wherein the chip system comprises:
a communication interface; and
a processor, configured to: invoke instructions through the communication interface and run the instructions, to cause a device installed with the chip system to perform the method according to any one of claims 1 to 11, or cause a device installed with the chip system to perform the method according to any one of claims 12 to 22.

27. A computer program product, comprising computer-executable instructions, wherein when the computer-executable instructions are run on a computer, the computer is caused to perform the method according to any one of claims 1 to 11, or the electronic apparatus is caused to perform the method according to any one of claims 12 to 22.
